(19) Europäisches Patentamt
European Patent Office
Office européen des brevets

(11) **EP 4 084 192 A1**

(12) **EUROPEAN PATENT APPLICATION**
published in accordance with Art. 153(4) EPC

(43) Date of publication:
**02.11.2022 Bulletin 2022/44**

(21) Application number: **20905961.7**

(22) Date of filing: **14.12.2020**

(51) International Patent Classification (IPC):
$H01M\ 50/10$ (2021.01)    $B32B\ 7/022$ (2019.01)
$B32B\ 27/18$ (2006.01)    $B32B\ 27/32$ (2006.01)
$H01G\ 11/78$ (2013.01)    $H01M\ 10/052$ (2010.01)
$H01M\ 10/0562$ (2010.01)    $H01M\ 50/172$ (2021.01)
$H01M\ 50/183$ (2021.01)

(52) Cooperative Patent Classification (CPC):
**B32B 7/022; B32B 27/18; B32B 27/32;
H01G 11/78; H01M 10/052; H01M 10/0562;
H01M 50/10; H01M 50/172; H01M 50/183;
Y02E 60/10; Y02P 70/50**

(86) International application number:
**PCT/JP2020/046602**

(87) International publication number:
**WO 2021/131865 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2019 JP 2019239354
27.12.2019 JP 2019238450
24.03.2020 JP 2020052376**

(71) Applicant: **TOPPAN INC.**
**Tokyo 110-0016 (JP)**

(72) Inventors:
• **IMAMOTO, Junya**
**Tokyo 110-0016 (JP)**
• **MURATA, Koji**
**Tokyo 110-0016 (JP)**

(74) Representative: **Hoffmann Eitle
Patent- und Rechtsanwälte PartmbB
Arabellastraße 30
81925 München (DE)**

(54) **OUTER PACKAGE MATERIAL FOR ELECTRICITY STORAGE DEVICES, ELECTRICITY STORAGE DEVICE USING SAME, METHOD FOR PRODUCING OUTER PACKAGE MATERIAL FOR ELECTRICITY STORAGE DEVICES, AND METHOD FOR SELECTING SEALANT FILM THAT IS USED AS SEALANT LAYER IN OUTER PACKAGE MATERIAL FOR ELECTRICITY STORAGE DEVICES**

(57) A packaging material for a power storage device and a power storage device using the same, a method of producing a packaging material for a power storage device, and a method of selecting a sealant film used as a sealant layer in the packaging material for a power storage device are provided.

Fig. 1

**Description**

[Technical Field]

The present disclosure relates to packaging materials for power storage devices and power storage devices using the same. The present disclosure also relates to packaging materials for power storage devices and methods of producing the same, and methods of selecting sealant films used as sealant layers in packaging materials for power storage devices.

[Background Art]

As power storage devices, there are known, for example, secondary batteries, such as lithium ion batteries, nickel hydride batteries, and lead batteries, and electrochemical capacitors, such as electric double layer capacitors. Due to miniaturization of mobile devices, limitation in installation spaces, or other reasons, further miniaturization of power storage devices is being sought, and thus attention is being given to lithium ion batteries having high energy density. Packaging materials for lithium ion batteries have conventionally been metal cans; however, there is a growing trend of using multilayer films as such packaging materials because they are lightweight, highly heat dissipating, and can be produced at low cost.

Lithium ion batteries using the above multilayer films as packaging materials are referred to as laminated lithium ion batteries. The packaging materials cover the battery contents (positive electrode, separator, negative electrode, electrolyte, etc.) to prevent entry of moisture into the inside. Laminated lithium ion batteries are each produced by, for example, forming a recess in a portion of a packaging material by cold forming, accommodating battery contents in the recess, folding back the remaining portion of the packaging material, and sealing the edges by heat sealing (e.g., see PTL 1).

[Citation List]

[Patent Literature]

PTL 1: JP 2013-101765 A

[Summary of the Invention]

[Technical Problem]

Power storage devices, which are referred to as fully solid-state batteries, are under research and development as next generation batteries replacing lithium ion batteries. Fully solid-state batteries are characterized by use of a solid electrolyte as an electrolytic substance, without using an organic electrolyte solution. Lithium ion batteries cannot be used under temperature conditions higher than the boiling point of their electrolyte solution (about 80°C), whereas fully solid-state batteries can be used under temperature conditions higher than 100°C, and can enhance conductivity of the lithium ions when the batteries are used under high temperature conditions (e.g., 100°C to 150°C).

(First aim)

However, if a laminated fully solid-state battery is produced using the above multilayer film as a packaging material and if heat resistance of the packaging material is insufficient, interlayer adhesion (adhesion between layers fused by heat sealing) under high temperature conditions cannot be necessarily secured after heat sealing, heat seal strength may be lowered, and sealability of the fully solid-state battery may be deteriorated accordingly.

The present disclosure has been made in light of the above issue and has a first aim of providing a packaging material for a power storage device capable of securing high heat seal strength under high temperature conditions, and providing a storage device using the packaging material.

(Second aim)

If a laminated fully solid-state battery is produced using the above multilayer film as a packaging material and if heat resistance of the packaging material is insufficient, interlayer adhesion (adhesion between layers fused by heat sealing) under high temperature conditions cannot be necessarily secured after heat sealing, heat seal strength may be lowered, and sealability of the fully solid-state battery may be deteriorated accordingly.

Therefore, from the perspective of securing heat seal strength under high temperature conditions, the present inventors are considering a method in which a resin having high heat resistance is used for a sealant layer to be fused by heat sealing. However, the present inventors have found another issue that when a fully solid-state battery is produced using a packaging material that uses a resin having high heat resistance as a sealant layer, and the produced battery is operated under high temperature conditions and the temperature is then returned to room temperature, heat seal strength under room temperature conditions is reduced.

The present disclosure has been made in light of the above issue and has a second aim of providing a packaging material for a power storage device capable of securing high heat seal strength under high temperature conditions, and also securing high heat seal strength under room temperature conditions after exposure to high temperature conditions, and providing a storage device using the packaging material.

(Third aim)

If a laminated fully solid-state battery is produced using the above laminate as a packaging material, the package of the fully solid-state battery may have insufficient adhesion due to the packaging material having insufficient heat resistance.

The present disclosure provides a packaging material for a power storage device that can sufficiently achieve high level seal strength under high temperature conditions balanced with initial seal strength, and a method of producing the packaging material. The present disclosure also provides a method of selecting a sealant film used as a sealant layer in a packaging material for a power storage device. Provision of these is a third aim of the present disclosure.

[Solution to Problem]

(First aspect)

In order to achieve the first aim, the present disclosure provides a packaging material for a power storage device including at least a substrate layer, a barrier layer, and a sealant layer in this order. In the packaging material, the sealant layer contains a component (A) that is a compound containing polyolefin units and having a melting point of 175°C or more or a glass transition temperature of 75°C or more, and a component (B) that is at least one resin selected from the group consisting of a polyethylene resin and a polypropylene resin.

According to the above packaging material for a power storage device, provision of the sealant layer having the above structure can secure high heat seal strength even under high temperature conditions. This is because, due to use of the components (A) and (B) in combination, the component (B) can secure high heat sealability, and the component (A) can impart high heat resistance to the sealant layer. Therefore, according to the above packaging material, sufficient heat seal strength can be achieved at a heat sealing temperature of about 200°C, while maintaining high interlayer adhesion (adhesion between sealant layers fused by heat sealing) after heat sealing, even under high temperature conditions (e.g., about 150°C), and thus high heat seal strength can be secured.

In the above packaging material for a power storage device, the component (A) may contain a polyamide/polyolefin graft copolymer; and a content of the component (A) in the sealant layer may be 5 parts by mass to 100 parts by mass relative to 100 parts by mass of the component (B). In this case, more sufficient heat seal strength can be achieved at a heat sealing temperature of about 200°C, and high heat seal strength can be more sufficiently secured even under high temperature conditions.

In the above packaging material for a power storage device, the component (A) may contain a polyamide/polyethylene graft copolymer; the component (B) may contain a polypropylene resin; and the sealant layer may further contain a component (C) that is a compatibilizer having a site compatible with the polyamide/polyethylene graft copolymer and a site compatible with the polypropylene resin. If the component (A) contains a polyamide/polyethylene graft copolymer and the component (B) contains a polypropylene resin, heat resistance of the sealant layer can be further improved. Furthermore, although the polyamide/polyethylene graft copolymer is dispersible in the polypropylene resin, there is room for improving the compatibility. Thus, addition of the component (C) can improve compatibility between the components (A) and (B) and can further improve heat seal strength.

In the above packaging material for a power storage device, the component (A) may contain a cycloolefin copolymer; and a content of the component (A) in the sealant layer may be 5 parts by mass to 100 parts by mass relative to 100 parts by mass of the component (B). In this case, more sufficient heat seal strength can be achieved at a heat sealing temperature of about 200°C, and high heat seal strength can be more sufficiently secured even under high temperature conditions.

In the above packaging material for a power storage device, the component (A) may contain an ethylene/cycloolefin copolymer; the component (B) may contain the polypropylene resin; and the sealant layer may further contain a component (C) that is a compatibilizer having a site compatible with the ethylene/cycloolefin copolymer and a site compatible with the polypropylene resin. If the component (A) contains an ethylene/cycloolefin copolymer and the component (B) contains a polypropylene resin, heat resistance of the sealant layer can be further improved. Furthermore, although the ethylene/cycloolefin copolymer is dispersible in the polypropylene resin, there is room for improving compatibility. Thus, addition of the component (C) can improve compatibility between the components (A) and (B) and can further improve heat seal strength.

In the above packaging material for a power storage device, one surface or each of both surfaces of the barrier layer may be provided with an anticorrosion treatment layer. Provision of the anticorrosion treatment layer can prevent corrosion of the barrier layer, and interposing the anticorrosion treatment layer can enhance adhesion between the barrier layer and the layer adjacent thereto. Furthermore, if a sulfide-based material is used in an electrolyte of a fully solid-state battery and if moisture permeates into the packaging material, the sulfide-based compound may react with the water and produce hydrogen sulfide ($H_2S$). This $H_2S$ may reduce adhesion between the barrier layer and the layer adjacent thereto. However, if the above packaging material for a power storage device is used as a packaging material for the fully solid-state battery, provision of the anticorrosion treatment layer on the surface of the barrier layer can impart $H_2S$ resistance to the barrier layer and can minimize reduction of adhesion between the barrier layer and the layer adjacent thereto.

In the above packaging material for a power storage device, when the substrate layer side of the packaging material for a power storage device is outermost and the sealant layer side thereof is innermost, at least one of layers located further inside than the barrier layer may contain a hydrogen sulfide adsorbent. As described above, hydrogen sulfide ($H_2S$) may be produced in a fully solid-state battery; however, if at least one of layers located further inside than the barrier layer contains a hydrogen sulfide adsorbent, the layer containing the hydrogen sulfide adsorbent can adsorb and detoxify $H_2S$ produced in the packaging material, and thus higher level protection against $H_2S$ can be performed for the barrier layer or a current collector (copper foil in particular), or the positive electrode containing Ni.

In the above packaging material for a power storage device, the sealant layer may have a thickness of 10 $\mu$m to 100 $\mu$m. In this case, thickness reduction of the packaging material can be well balanced with improvement in heat seal strength under high temperature conditions.

The above packaging material for a power storage device may be used for a fully solid-state battery.

The present disclosure provides a power storage device including a power storage device body, current output terminals extending from the power storage device body; and the packaging material for a power storage device of the above disclosure, the packaging material sandwiching the current output terminals and accommodating the power storage device body. The above power storage device may be a fully solid-state battery.

(Second aspect)

In order to achieve the second aim, the present disclosure provides a packaging material for a power storage device including at least a substrate layer, a barrier layer, and a sealant layer in this order. In the packaging material, the sealant layer contains a polyolefin as a first resin, and at least one resin, as a second resin, selected from the group consisting of a polyester, a polyamide, a polycarbonate, and a polyphenylene ether.

Use of the second resin can improve heat seal strength of the packaging material under high temperature conditions. However, the present inventors have found that, if the second resin is used singly and if the packaging material is returned to room temperature conditions after exposure to high temperature conditions, heat seal strength under room temperature conditions is lowered compared to the heat seal strength before exposure to high temperature conditions, and it would become difficult to secure high heat seal strength. The second resin has high heat resistance and its performance when used under high temperature conditions has been studied; however, no sufficient study has been performed for the fact that the heat seal strength under room temperature conditions changes before and after exposure to high temperature conditions. As fully solid-state batteries are repeatedly placed under high temperature conditions when used and room temperature conditions when not used, it is required for the packaging materials not to deteriorate the heat seal strength even under such use environments. As a result of diligent study, the inventors have found that use of the first resin and the second resin in combination can minimize lowering of heat seal strength under room temperature conditions after exposure to high temperature conditions. Specifically, according to the above packaging material for a power storage device, use of a specific first resin and a specific second resin in combination as a material for the sealant layer can secure high teat seal strength under high temperature conditions, and can also secure high heat seal strength under room temperature conditions after exposure to high temperature conditions.

In the above packaging material for a power storage device, the first resin may contain a modified polyolefin having a polar group that can react with the second resin. Furthermore, the modified polyolefin may be a polyolefin modified with maleic anhydride. The first and second resins mentioned above do not necessarily have good compatibility with each other and may be insufficient in dispersibility, and thus the effect of using them in combination mentioned above may not be necessarily sufficiently exerted. In this regard, if the first resin contains a modified polyolefin having a polar group that can react with the second resin, compatibility between the first and second resins can be enhanced and thus dispersibility can be improved. Consequently, the synergistic effect of using the first and second resins in combination can be more sufficiently exerted. Thus, higher heat seal strength can be secured under high temperature conditions, and higher heat seal strength can also be secured under room temperature conditions after exposure to high temperature conditions. Furthermore, if the modified polyolefin is a polyolefin modified with maleic anhydride, the above effect can be more sufficiently exerted.

The first resin may contain the modified polyolefin and a polyolefin having no polar group that can react with the second resin (unmodified polyolefin). Since modified polyolefins tend to decrease in melting point and molecular weight due to modification, use of a generally used polyolefin (unmodified polyolefin) in combination can minimize reduction in heat seal strength under high temperature conditions. If a modified polyolefin and an unmodified polyolefin are used in combination, the modified polyolefin can serve as a compatibilizer to improve dispersibility of the unmodified polyolefin and the second resin.

In the above packaging material for a power storage device, the sealant layer may contain the polyester and/or the polyamide; and the polyester and/or the polyamide may have a crystallinity of 10% or more and less than 70% after heat-sealing the sealant layer for 3 seconds at 260°C and 0.5 MPa and cooling it to 25°C. If the crystallinity of the polyester and/or the polyamide measured through the above method is in the above range, heat seal strength can be further improved under high temperature conditions, and flexibility of the packaging material can be further improved.

In the above packaging material for a power storage device, one surface or each of both surfaces of the barrier layer may be provided with an anticorrosion treatment layer. Provision of the anticorrosion treatment layer can prevent corrosion of the barrier layer, and interposing the anticorrosion treatment layer can enhance adhesion between the barrier layer and the layer adjacent thereto. Furthermore, if a sulfide-based material is used in an electrolyte of a fully solid-state battery and if moisture permeates into the packaging material, the sulfide-based compound may react with the water and produce hydrogen sulfide ($H_2S$). This $H_2S$ may reduce adhesion between the barrier layer and the layer adjacent thereto. However, if the above packaging material for a power storage device is used as a packaging material for the fully solid-state battery, provision of the anticorrosion treatment layer on the surface of the barrier layer can impart $H_2S$ resistance to the barrier layer and can minimize reduction of adhesion between the barrier layer and the layer adjacent thereto. Therefore, according to the above packaging material for a power storage device, high heat seal strength can be secured under high temperature conditions even when the packaging material is exposed to hydrogen sulfide, and can also secure high heat seal strength under room temperature conditions after exposure to high temperature conditions.

In the above packaging material for a power storage device, when the substrate layer side of the packaging material for a power storage device is outermost and the sealant layer side thereof is innermost, at least one of layers located further inside than the barrier layer may contain a hydrogen sulfide adsorbent. As described above, hydrogen sulfide ($H_2S$) may be produced in a fully solid-state battery; however, if at least one of layers located further inside than the barrier layer contains a hydrogen sulfide adsorbent, the layer containing the hydrogen sulfide adsorbent can adsorb and detoxify $H_2S$ produced in the packaging material, and thus higher level protection against $H_2S$ can be performed for the barrier layer or a current collector (copper foil in particular), or the positive electrode containing Ni. Therefore, according to the above packaging material for a power storage device, high heat seal strength can be secured under high temperature conditions even when the packaging material is exposed to hydrogen sulfide, and can also secure high heat seal strength under room temperature conditions after exposure to high temperature conditions.

The above packaging material for a power storage device may be used for a fully solid-state battery.

The present disclosure provides a power storage device including a power storage device body, current output terminals extending from the power storage device body; and the packaging material for a power storage device of the above disclosure, the packaging material sandwiching the current output terminals and accommodating the power storage device body. The above power storage device may be a fully solid-state battery.

(Third aspect)

In order to achieve the third aim, a packaging device for a power storage device according to an aspect of the present disclosure has a laminated structure that includes at least a substrate layer, a barrier layer, and a sealant layer in this order. In the packaging material, the sealant layer has at least one secondary dispersion peak $\gamma$ in the range of -130°C to -50°C in a loss tangent tan $\delta$ profile which is obtained through dynamic viscoelastic measurement under a condition of 1.0 Hz.

The secondary dispersion peak $\gamma$ is an index of molecular motion of the resin material forming the sealant layer, and specifically, it is a parameter indicating local torsional motion of the main chains and thermal motion of the entire side chains in crystalline and amorphous portions of the resin material. According to the study performed by the present inventors, the sealant layer satisfying the above requirements for the secondary dispersion peak $\gamma$ contains a resin material commencing molecular motion at a relatively high temperature, and thus can exhibit high seal strength at high temperatures. It means that as the secondary dispersion peak $\gamma$ appears at a lower temperature, the sealant layer has higher flexibility, and as it appears at a higher temperature, the sealant has higher heat resistance.

The sealant layer is preferred to have at least one primary dispersion peak $\alpha$ in the range of 30°C to 130°C in the tan $\delta$ profile. The primary dispersion peak $\alpha$ is a parameter indicating micro-Brownian motion of molecular chains in amorphous portions of the resin material contained in the sealant layer at around glass transition temperature (Tg). According to the study performed by the present inventors, the sealant layer satisfying the above requirements for the primary dispersion peak $\alpha$ contains a resin material commencing molecular motion at a relatively low temperature (e.g., room temperature), and thus has high flexibility. Therefore, the sealant layer can exhibit much higher seal strength (initial seal strength) under room temperature conditions. It means that as the primary dispersion peak $\alpha$ appears at a lower temperature, the sealant layer has higher flexibility, and as it appears at a higher temperature, the sealant layer has higher heat resistance.

The sealant layer is preferred to contain a plasticizer. By controlling the content of the plasticizer in the sealant layer, the temperatures at which the secondary dispersion peak $\gamma$ and the primary dispersion peak $\alpha$ appear can be controlled. For example, increase in the content of the plasticizer can shift the secondary dispersion peak $\gamma$ and the primary dispersion peak $\alpha$ to a lower temperature side.

The sealant layer is preferred to contain a hydrogen sulfide adsorbent. In a fully solid-state battery, for example, a sulfide-based electrolyte, an oxide-based electrolyte, or an organic polymer-based electrolyte may be used as an electrolyte. Of these electrolytes, if a sulfide-based electrolyte is used, moisture that may enter the cell can produce hydrogen sulfide which may reduce adhesion between the barrier layer (e.g., metal foil) and the sealant layer. If the sealant layer contains a hydrogen sulfide adsorbent, high seal strength can be maintained at room temperature and high temperatures even after exposure to hydrogen sulfide. The above packaging material for a power storage device may further contain an adhesive layer between the barrier layer and the sealant layer, and in this case, the adhesive layer may contain a hydrogen sulfide adsorbent. From the perspective of the content of the hydrogen sulfide adsorbent, at least the sealant layer is preferred to contain the hydrogen sulfide adsorbent.

The above packaging material for a power storage device is preferred to further include an anticorrosion treatment layer provided on at least one surface of the barrier layer. If the packaging material for a power storage device includes an anticorrosion treatment layer having acid resistance, high seal strength can be maintained at room temperature and high temperatures even after exposure to hydrogen sulfide, and improvement in seal strength can be obtained even before exposure to hydrogen sulfide.

An aspect of the present disclosure relates to a method of selecting a sealant film which is used as a sealant layer in a packaging material for a power storage device. This selection method includes the following steps.

> (A) A step of performing dynamic viscoelastic measurement under a condition of 1.0 Hz for a sealant film to be evaluated.
> (B) A step of determining whether there is at least one secondary dispersion peak $\gamma$ in the range of -130°C to -50°C in a tan $\delta$ profile obtained through the dynamic viscoelastic measurement.

Use of a sealant film as a sealant layer, in which there is at least one secondary dispersion peak $\gamma$ in the range of -130°C to -50°C in the tan $\delta$ profile, can produce a packaging material for a power storage device, with high seal strength at high temperatures being balanced with high initial seal strength.

A method of producing a packaging material for a power storage device according to an aspect of the present disclosure includes a step of preparing a sealant film which is determined as having at least one secondary dispersion peak $\gamma$ in the range of -130°C to -50°C in the tan $\delta$ profile, in the above selection method; and a step of bonding the sealant film and a barrier layer together.

[Advantageous Effects of the Invention]

(First effect)

According to the present disclosure, there can be provided a packaging material for a power storage device which can secure high heat seal strength under high temperature conditions, and a power storage device using the packaging material.

(Second effect)

According to the present disclosure, there can be provided a packaging material for a power storage device capable of securing high heat seal strength under high temperature conditions, and also securing high heat seal strength under room temperature conditions after exposure to high temperature conditions, and a storage device using the packaging material.

(Third effect)

According to the present disclosure, there can be provided a packaging material for a power storage device that can achieve sufficiently high seal strength at high temperatures, balanced with sufficiently high initial seal strength, and a method of producing the packaging material. In addition, according to the present disclosure, there can be provided a method of selecting a sealant film which is used as a sealant layer in a packaging material for a power storage device.

[Brief Description of the Drawings]

Fig. 1 is a schematic cross-sectional view illustrating a packaging material for a power storage device according to an embodiment of the present disclosure.
Fig. 2 is a schematic cross-sectional view illustrating a packaging material for a power storage device according to an embodiment of the present disclosure.
Fig. 3 is a schematic cross-sectional view illustrating a packaging material for a power storage device according to an embodiment of the present disclosure.
Fig. 4 is a perspective view illustrating a power storage device according to an embodiment of the present disclosure.
Fig. 5 is schematic diagram illustrating a method of preparing a sample used for measuring heat seal strength according to an example.
Fig. 6 is a perspective view illustrating an example of a fully solid-state battery provided with a packaging material according to the present disclosure.
Fig. 7 is a schematic cross-sectional view illustrating an embodiment of a packaging material.
Figs. 8(a) to 8(c) are schematic cross-sectional views each illustrating a structure of a sealant layer.
Fig. 9 is a schematic cross-sectional view taken along the line IV-IV of Fig. 6, illustrating a structure of a tab (a terminal-coating resin film and a metal terminal) of the fully solid-state battery.

[Description of the Embodiments]

With reference to the drawings, preferred embodiments of the present disclosure will be described in detail. In the drawings, like components are given like reference signs to omit repeated description. Also, dimensional ratios in the drawings are not limited to the ratios shown in the drawings.

[First and second aspects]

[Packaging material for power storage device]

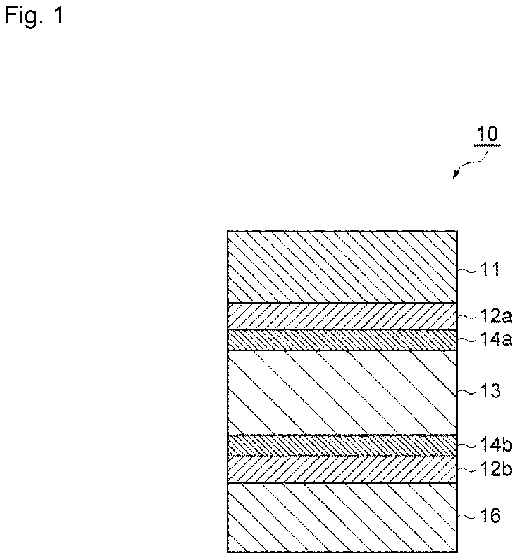

Fig. 1 is a schematic cross-sectional view illustrating an embodiment of a packaging material for a power storage device according to the present disclosure. As shown in Fig.1, a packaging material (packaging material for a power storage device) 10 of the present embodiment is a laminate including a substrate layer 11, a first adhesive layer 12a provided to one surface of the substrate layer 11, a barrier layer 13 provided to a surface of the first adhesive layer 12a facing away from the surface provided with the substrate layer 11 and having first and second anticorrosion treatment layers 14a and 14b on respective surfaces thereof, a second adhesive layer 12b provided to a surface of the barrier layer 13 facing away from the surface provided with the first adhesive layer 12a, and a sealant layer 16 provided to a surface of the second adhesive layer 12b facing away from the surface provided with the barrier layer 13. The first anticorrosion treatment layer 14a is provided to the substrate layer 11 side surface of the barrier layer 13, and the second anticorrosion treatment layer 14b is provided to the sealant layer 16 side surface of the barrier layer 13. In the packaging material 10, the substrate layer 11 is the outermost layer and the sealant layer 16 is the innermost layer. In other words, the packaging material 10 is used with the substrate layer 11 being outermost in the power storage device and the sealant layer 16 being innermost in the power storage device.
In the packaging material 10 according to the first aspect of the present embodiment, the sealant layer 16 contains a component (A) that is a compound containing polyolefin units and having a melting point of 175°C or more or a glass transition temperature of 75°C or more, and a component (B) that is at least one resin selected from the group consisting of a polyethylene resin and a polypropylene resin.
In the packaging material 10 according to the second aspect of the present embodiment, the sealant layer 16 contains a polyolefin as a first resin, and at least one resin, as a second resin, selected from the group consisting of a polyester, a polyamide, a polycarbonate, and a polyphenylene ether.
Details of the layers forming the packaging material 10 will be described.

<Substrate layer 11>

The substrate layer 11 imparts heat resistance to the packaging material required in a sealing step when producing a power storage device, and prevents formation of pinholes that may occur during a forming process or during distribution. In particular, in the case of packaging materials used for large size power storage devices, the substrate layer 11 can also impart scratch resistance, chemical resistance, insulation properties, and the like.

The substrate layer 11 is preferred to be a layer formed of a resin having insulation properties. The resin that can be used for the substrate layer 11 may be a polyester resin, polyamide resin, polyimide resin, polyamide-imide resin, polyether ketone resin, polyphenylene sulfide resin, polyetherimide resin, polysulphone resin, fluororesin, phenol resin, melamine resin, urethane resin, allyl resin, silicone resin, epoxy resin, furan resin, acetyl cellulose resin, or the like.

When these resins are used for the substrate layer 11, they may be in the form of a stretched or unstretched film or in the form of a coating. Also, the substrate layer 11 may be a monolayer or a multilayer. In the case of a multilayer, different resins may be combined. If the substrate layer 11 is a film, the film may be a coextruded film, or may be a film in which layers are laminated via an adhesive. If the substrate layer 11 is a coating, coating may be performed the number of times equivalent to the number of laminations. Alternatively, films and coatings may be combined to form a multilayer.

Of these resins, a polyester resin and a polyamide resin are preferred to be used for the substrate layer 11 because of having good formability. Examples of the polyester resin may include polyethylene terephthalate, polybutylene terephthalate, and polyethylene naphthalate. Examples of the polyamide resin forming a polyamide film may include nylon 6, nylon 6,6, copolymer of nylon 6 and nylon 6,6, nylon 6, nylon 9T, nylon 10, polymetaxylylene adipamide (MXD6), nylon 11, and nylon 12.

If these resins are used in the form of a film, the film is preferred to be a biaxially stretched film. The stretching method used for the biaxially stretched film may be, for example, sequential biaxial stretching, tubular biaxial stretching, simultaneous biaxial stretching, or the like. From the perspective of obtaining better deep drawing formability, the biaxially stretched film is preferred to be stretched using tubular biaxial stretching.

The substrate layer 11 is preferred to be a layer formed of a resin film which is made of a resin having insulation properties. The resin film may be a stretched or unstretched film, such as a polyester film, polyamide film, or polypropylene film. The substrate layer 11 may be a monolayer film formed of one of these resin films, or a laminated film formed of two or more of these resin films.

Of these films, the substrate layer 11 is preferred to be a polyester film or a polyamide film, and more preferred to be a polyamide film, because of having good formability. These films are preferred to be biaxially stretched films. The polyester resin forming the polyester film may be, for example, polyethylene terephthalate. Examples of the polyamide resin forming the polyamide film may include nylon 6, nylon 6,6, copolymer of nylon 6 and nylon 6,6, nylon 6,10, polymetaxylylene adipamide (MXD6), nylon 11, and nylon 12. Of these resins, nylon 6 (ONy) is preferred from the perspective of having high heat resistance, piercing strength, and impact strength.

The stretching method used for the biaxially stretched film may be, for example, sequential biaxial stretching, tubular biaxial stretching, simultaneous biaxial stretching, or the like. From the perspective of obtaining better deep drawing formability, the biaxially stretched film is preferred to be stretched using tubular biaxial stretching.

In order to minimize deformation during sealing, the substrate layer 11 is preferred to have a peak melting temperature higher than that of the sealant layer 16. If the sealant layer 16 has a multilayer structure, the peak melting temperature of the sealant layer 16 refers to that of the layer having a highest peak melting temperature. The substrate layer 11 is preferred to have a peak melting temperature of 290°C or more, and more preferably in the range of 290°C to 350°C. The resin film that can be used for the substrate layer 11 and has a peak melting temperature in the above range may be a nylon film, PET film, polyamide film, polyphenylene sulfide film (PPS film), or the like. The substrate layer 11 may be formed using a commercially available film, or may be formed using a coating film (obtained by applying and drying a coating liquid). The substrate layer 11 may have a monolayer structure or a multilayer structure, or may be formed by applying a thermosetting resin. The substrate layer 11 may contain, for example, various additives (e.g., flame retarder, slip agent, antiblocking agent, antioxidant, light stabilizer, and tackifier).

When the peak melting temperature of the substrate layer 11 is expressed as $T_{11}$ and that of the sealant layer 16 is expressed as $T_{16}$, the difference therebetween ($T_{11}$-$T_{16}$) is preferred to be 20°C or more. If the temperature difference is 20°C or more, deterioration in appearance of the packaging material 10 due to heat sealing can be even more sufficiently minimized. In order to minimize deformation during sealing, the substrate layer 11 is preferred to have a peak melting temperature $T_{11}$ which is higher than the peak melting temperature $T_{16}$ of the sealant layer 16 by 30°C or more.

The substrate layer 11 may be provided by being directly applied onto the barrier layer 13 or the anticorrosion treatment layer 14a, which will be described later. In this case, the first adhesive layer 12a described later is unnecessary. As a method of forming the substrate layer 11 by coating, a method including applying a resin coating liquid such as of a urethane resin, acrylic resin, or polyester resin, and curing the coating liquid using UV irradiation, high temperature heating, aging (curing), or the like may be used. The coating method is not particularly limited, but various methods such as gravure coating, reverse coating, roll coating, and bar coating may be used.

The substrate layer 11 is preferred to have a thickness of 5 $\mu$m to 50 $\mu$m, more preferably 6 $\mu$m to 40 $\mu$m, even more preferably 10 $\mu$m to 30 $\mu$m, and most preferably 12 $\mu$m to 30 $\mu$m. If the thickness of the substrate layer 11 is 5 $\mu$m or more, there may be a tendency to improve pinhole resistance and insulation properties of the packaging material 10 for a power storage device. If the thickness of the substrate layer 11 exceeds 50 $\mu$m, the total thickness of the packaging material 10 for a power storage device may increase and the battery electrical capacity may have to be reduced, which is not desirable.

<First adhesive layer 12a>

The first adhesive layer 12a adheres the substrate layer 11 to the barrier layer 13. For example, the material forming the first adhesive layer 12a may be specifically, for example, a polyurethane resin prepared by reacting a bifunctional or higher isocyanate compound (polyfunctional isocyanate compound) with a base resin such as a polyester polyol, polyether polyol, acrylic polyol, carbonate polyol, or other materials. These various polyols can be used singly or in combination of two or more, according to the functions and performance required of the packaging material 10. Other than the above materials, a material that can be used may be a material obtained by mixing a curing agent into an epoxy resin as a base resin, but it is not limited to these. Moreover, other various additives and stabilizers may be added to the adhesive mentioned above (polyurethane resin, epoxy resin, etc.) depending on the performance required of the adhesive.

The thickness of the first adhesive layer 12a is not particularly limited, but from the perspective of obtaining desired adhesive strength, conformability, processability, and the like, the thickness is preferred to be, for example, 1 $\mu$m to 10 $\mu$m, more preferred to be 2 $\mu$m to 7 $\mu$m, and even more preferred to be 3 $\mu$m to 7 $\mu$m.

<Barrier layer 13>

The barrier layer 13 has water vapor barrier properties to prevent entry of moisture into the power storage device. Furthermore, the barrier layer 13 may have ductility for undergoing deep drawing. Examples of the material that can be used for the barrier layer 13 may include various metal foils such as of aluminum, stainless steel and copper, deposited metal films, deposited inorganic oxide films, deposited carbon-containing inorganic oxide films, and films provided with these deposited films. As the films provided with a deposited film, for example, deposited aluminum films or deposited inorganic oxide films can be used. These films can be used singly or in combination of two or more. The barrier layer 13 is preferred to be formed of a metal foil, and more preferably an aluminum foil, from the perspective of mass (specific gravity), moisture resistance, processability, and cost.

The aluminum foil may be a soft aluminum foil, particularly one subjected to annealing treatment, from the perspective of imparting desired ductility during forming. However, it is more preferred to use an aluminum foil containing iron for the purpose of further imparting pinhole resistance and ductility during forming. The iron content in the aluminum foil is preferred to be 0.1 mass% to 9.0 mass% relative to 100 mass% of aluminum foil, and more preferred to be 0.5 mass% to 2.0 mass%. If the iron content is 0.1 mass% or more, a packaging material 10 having much higher pinhole resistance and ductility can be obtained. If the iron content is 9.0 mass% or less, a packaging material 10 having much higher flexibility can be obtained. An untreated aluminum foil may be used as the aluminum foil; however, an aluminum foil that has been subjected to degreasing treatment is preferred to be used from the perspective of imparting corrosion resistance. When the aluminum foil is degreased, only one surface of the aluminum foil may be degreased, or both surfaces may be degreased.

The thickness of the barrier layer 13 is not particularly limited, but is preferred to be 9 $\mu$m to 200 $\mu$m, and more preferred to be 15 $\mu$m to 100 $\mu$m, considering barrier properties, pinhole resistance, and processability.

<First and second anticorrosion treatment layers 14a and 14b>

The first and second anticorrosion treatment layers 14a and 14b are provided on the respective surfaces of the barrier layer 13 to prevent corrosion of the metal foil (metal foil layer) forming the barrier layer 13. The first anticorrosion treatment layer 14a increases adhesion between the barrier layer 13 and the first adhesive layer 12a. The second anticorrosion treatment layer 14b increases adhesion between the barrier layer 13 and the second adhesive layer 12b. The first and second anticorrosion treatment layers 14a and 14b may be identically formed or differently formed. The first and second anticorrosion treatment layers 14a and 14b (also simply termed anticorrosion treatment layers 14a and 14b hereinafter) may be formed through, for example, degreasing treatment, hydrothermal modification treatment, anodic oxidation treatment, chemical conversion treatment, or a combination of these treatments.

The degreasing treatment may be acid degreasing treatment, or alkaline degreasing treatment. The acid degreasing may be a method using an inorganic acid singly, such as sulfuric acid, nitric acid, hydrochloric acid or hydrofluoric acid, or may be a method using a mixture of these acids. The acid degreasing may include use of an acid degreasing agent obtained by dissolving a fluorine-containing compound such as monosodium ammonium difluoride with the above inorganic acid. Specifically, when an aluminum foil is used as the barrier layer 13, use of this acid degreasing agent is effective from the perspective of corrosion resistance, due to its contribution to forming a fluoride of aluminum in a passive state, in addition to obtaining the effect of degreasing aluminum. The alkaline degreasing may be a method using sodium hydroxide or the like.

The hydrothermal modification treatment may be, for example, a boehmite treatment in which an aluminum foil is immersion treated in boiling water to which triethanolamine has been added.

The anodic oxidation treatment may be, for example, an alumite treatment.

The chemical conversion treatment may be of an immersion type or a coating type. The immersion type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments including mixed phases thereof. The coating type chemical conversion treatment may be a method of applying a coating agent having corrosion prevention performance onto the barrier layer 13.

If at least part of the anticorrosion treatment layer is formed using any of hydrothermal modification treatment, anodic oxidation treatment, and chemical conversion treatment among these anticorrosion treatments, degreasing treatment is preferred to be performed in advance. If a degreased metal foil, such as an annealed metal foil, is used as the barrier layer 13, degreasing treatment is not required to be newly performed when forming the anticorrosion treatment layers 14a and 14b.

The coating agent used for the coating type chemical conversion treatment is preferred to contain trivalent chromium. The coating agent may contain at least one polymer selected from the group consisting of a cationic polymer and an anionic polymer, which will be described later.

Of the treatments mentioned above, the hydrothermal modification treatment and the anodic oxidation treatment, in particular, can dissolve the surface of an aluminum foil with a treatment agent and form an aluminum compound (boehmite or alumite) having high corrosion resistance. Therefore, these treatments, which form a co-continuous structure from the barrier layer 13 of an aluminum foil to the anticorrosion treatment layers 14a and 14b, are encompassed by the definition of the chemical conversion treatment. On the other hand, the anticorrosion treatment layers 14a and 14b can also be formed using only a pure coating method, which is not included in the definition of the chemical conversion treatment, as will be described later. For example, this method may be a method using a rare-earth oxide sol, such as cerium oxide, with a mean particle size of 100 nm or less exhibiting an anticorrosion effect (inhibitor effect) for aluminum, that is a material preferred from environmental aspects. Use of this method can impart an anticorrosion effect to the metal foil such as an aluminum foil even when using an ordinary coating method.

Examples of the rare-earth oxide sol may include sols using various solvents such as an aqueous solvent, alcohol solvent, hydrocarbon solvent, ketone solvent, ester solvent, and ether solvent. Of these sols, an aqueous sol is preferred.

To stabilize a dispersion, normally, the rare-earth oxide sol may contain, as a dispersion stabilizer, an inorganic acid such as nitric acid, hydrochloric acid, phosphoric acid, or a salt thereof, or an organic acid such as acetic acid, malic acid, ascorbic acid, or lactic acid. Of these dispersion stabilizers, phosphoric acid, in particular, is expected to impart the packaging material 10 with features of (1) stabilizing dispersion of the sol, (2) improving adhesion to the barrier layer 13 making use of an aluminum chelating ability of the phosphoric acid, (3) imparting corrosion resistance by trapping aluminum ions eluted under the influence of acids and corrosive gases (passive state formation), (4) improving cohesive force of the anticorrosion treatment layers 14a and 14b (oxide layers) by readily inducing dehydration condensation of the phosphoric acid even at low temperatures, and other features.

The phosphoric acid mentioned above or a salt thereof may be orthophosphoric acid, pyrophosphoric acid, metaphosphoric acid, or an alkali metal salt or an ammonium salt thereof. Of these acids and salts, condensed phosphoric acid such as trimetaphosphoric acid, tetrametaphosphoric acid, hexametaphosphoric acid, or ultrametaphosphoric acid, or an alkali metal salt or an ammonium salt thereof is preferred for functional expression in the packaging material 10. Considering dry film forming properties (drying capacity and heat quantity) when forming the anticorrosion treatment layers 14a and 14b of a rare-earth oxide through various coating methods using the rare-earth oxide sol mentioned above, a sodium salt is more preferred from the perspective of exhibiting high dehydration and condensation at low temperatures. The phosphate salt is preferred to be a water-soluble salt.

The content of the phosphoric acid (or a salt thereof) is preferred to be 1 part by mass to 100 parts by mass relative to 100 parts by mass of the rare-earth oxide. If the content of the phosphoric acid or salt thereof is 1 part by mass or more relative to 100 parts by mass of the rare-earth oxide, the rare-earth oxide sol becomes more stable and the function of the packaging material 10 becomes much better. The content of the phosphoric acid or salt thereof is more preferred to be 5 parts by mass or more relative to 100 parts by mass of the rare-earth oxide. If the content of the phosphoric acid or salt thereof is 100 parts by mass or less relative to 100 parts by mass of the rare-earth oxide, the function of the rare-earth oxide sol is enhanced. The content of the phosphoric acid or salt thereof is preferred to be 50 parts by mass or less relative to 100 parts by mass of the rare-earth oxide, and more preferred to be 20 parts by mass or less.

Since the anticorrosion treatment layers 14a and 14b formed of the rare-earth oxide sol are aggregates of inorganic particles, cohesive force of the layers may be reduced even after being dry-cured. Therefore, the anticorrosion treatment layers 14a and 14b in this case are preferred to be compounded with an anionic polymer or a cationic polymer mentioned below to supplement the cohesive force.

The anionic polymer may be a polymer having a carboxy group, and may include, for example, poly(meth)acrylic acid (or a salt thereof), or a copolymer obtained by copolymerizing poly(meth)acrylic acid as a main component. The copolymerization component of the copolymer may include an alkyl (meth)acrylate monomer (having a methyl group, ethyl group, n-propyl group, i-propyl group, n-butyl group, i-butyl group, t-butyl group, 2-ethylhexyl group, or cyclohexyl group, etc. as an alkyl group); an amide group-containing monomer, such as (meth)acrylamide, N-alkyl (meth)acrylamide, or N,N-dialkyl (meth)acrylamide (having a methyl group, ethyl group, n-propyl group, i-propyl group, n-butyl group, i-butyl group, t-butyl group, 2-ethylhexyl group, cyclohexyl group, etc. as an alkyl group), N-alkoxy (meth)acrylamide, or N,N-dialkoxy (meth)acrylamide (having a methoxy group, ethoxy group, butoxy group, isobutoxy group, etc. as an alkoxy group), N-methylol (meth)acrylamide, or N-phenyl (meth)acrylamide; a hydroxyl group-containing monomer, such as 2-hydroxyethyl (meth)acrylate, or 2-hydroxypropyl (meth)acrylate; a glycidyl group-containing monomer, such as glycidyl (meth)acrylate, or allyl glycidyl ether; a silane-containing monomer, such as (meth)acryloxypropyltrimethoxysilane or (meth)acryloxypropyltriethoxysilane; or an isocyanate group-containing monomer such as (meth)acryloxypropyl isocyanate.

These anionic polymers improve stability of the anticorrosion treatment layers 14a and 14b (oxide layers) obtained using the rare earth oxide sol. This improvement is achieved by the effect of protecting a hard and brittle oxide layer with the acrylic resin component, and the effect of capturing ionic contamination (particularly sodium ions) derived from the phosphoric acid contained in the rare-earth oxide sol (cation catcher). That is, if the anticorrosion treatment layers 14a and 14b obtained using the rare-earth oxide sol contain alkali metal ions or alkaline earth metal ions, such as sodium ions, in particular, the anticorrosion treatment layers 14a and 14b are likely to be deteriorated starting from the sites containing the ions. Therefore, the sodium ion or the like contained in the rare-earth oxide sol is fixed with the anionic polymer to improve durability of the anticorrosion treatment layers 14a and 14b.

The anticorrosion treatment layers 14a and 14b prepared by combining the anionic polymer with the rare-earth oxide sol have corrosion prevention performance equivalent to that of the anticorrosion treatment layers 14a and 14b formed by applying chromate treatment to an aluminum foil. The anionic polymer is preferred to have a structure in which a polyanionic polymer that is essentially water soluble is crosslinked. The crosslinking agent used for forming this structure may be a compound having, for example, an isocyanate group, glycidyl group, carboxy group, or oxazoline group.

Examples of the compound having an isocyanate group may include diisocyanates such as tolylene diisocyanate, xylylene diisocyanate or a hydrogenated product thereof, hexamethylene diisocyanate, 4,4'-diphenylmethane diisocyanate or a hydrogenated product thereof, and isophorone diisocyanate; or polyisocyanates such as an adduct obtained by reacting these isocyanates with a polyhydric alcohol such as trimethylolpropane, a biuret obtained by reacting the isocyanates with water, or an isocyanurate as a trimer; and blocked polyisocyanates obtained by blocking these polyisocyanates with alcohols, lactams, oximes, or the like.

Examples of the compound having a glycidyl group may include epoxy compounds obtained by permitting epichlorohydrin to act on a glycol, such as ethylene glycol, diethylene glycol, triethylene glycol, polyethylene glycol, propylene glycol, dipropylene glycol, tripropylene glycol, polypropylene glycol, 14a,14b-butanediol, 1,6-hexanediol, or neopentyl glycol; epoxy compounds obtained by permitting epichlorohydrin to act on a polyhydric alcohol, such as glycerin, polyglycerin, trimethylolpropane, pentaerythritol, or sorbitol; and epoxy compounds obtained by permitting epichlorohydrin to act on a dicarboxylic acid, such as phthalic acid, terephthalic acid, oxalic acid, or adipic acid.

Examples of the compound having a carboxy group may include various aliphatic or aromatic dicarboxylic acids and the like. Also, poly(meth)acrylic acid or an alkali (earth) metal salt of poly(meth)acrylic acid may be used.

Examples of the compound having an oxazoline group may include low molecular weight compounds having two or more oxazoline units, or when using a polymerizable monomer such as isopropenyloxazoline, compounds obtained by copolymerizing the polymerizable monomer with an acrylic monomer such as (meth)acrylic acid, alkyl ester (meth)acrylate, or hydroxyalkyl (meth)acrylate.

Furthermore, the anionic polymer may be reacted with a silane coupling agent, or more specifically, the carboxy group of the anionic polymer may be selectively reacted with a functional group of a silane coupling agent, so that the cross-linking point can have a siloxane bond. In this case, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β(aminoethyl)-γ-aminopropyltrimethoxysilane, γ-isocyanatopropyltriethoxysilane, or the like may be used. Of these silanes, an epoxy silane, aminosilane, or isocyanate silane is preferred, considering reactivity with an anionic polymer or a copolymer thereof in particular.

The ratio of these crosslinking agents to the anionic polymer is preferred to be 1 part by mass to 50 parts by mass, and more preferred to be 10 parts by mass to 20 parts by mass, relative to 100 parts by mass of the anionic polymer. If the ratio of such a crosslinking agent is 1 part by mass or more relative to 100 parts by mass of the anionic polymer, a sufficiently crosslinked structure may be easily formed. If the ratio of such a crosslinking agent is 50 parts by mass or less relative to 100 parts by mass of the anionic polymer, pot life of the coating liquid may improve.

The method used for crosslinking the anionic polymer is not limited to using the crosslinking agents mentioned above, but may be a method in which an ionic crosslinkage is formed using a titanium or zirconium compound.

The cationic polymer may be a polymer having an amine, including polyethyleneimine, an ionic polymer complex composed of a polymer having polyethyleneimine and a carboxylic acid, a primary amine graft acrylic resin obtained by grafting a primary amine onto an acrylic backbone, polyallylamine or a derivative thereof, and aminophenol. Examples of the polyallylamine may include homopolymers or copolymers of allylamine, allylamine amide sulfate, diallylamine, and dimethylallylamine. These amines may be free amines or may be ones stabilized with acetic acid or hydrochloric acid. Maleic acid, sulfur dioxide, or the like may be used as a copolymer component. Furthermore, a primary amine may be used after being partially methoxylated to impart crosslinking properties thereto, or aminophenol may also be used. In particular, allylamine or a derivative thereof is preferred.

The cationic polymer is preferred to be used in combination with a crosslinking agent having a functional group, such as a carboxy group or a glycidyl group, which can react with an amine/imine. The crosslinking agent to be used in combination with the cationic polymer may be a polymer having a carboxylic acid that forms an ionic polymer complex with polyethyleneimine. Examples of such a crosslinking agent may include a polycarboxylic acid (salt) such as a polyacrylic acid or an ionic salt thereof, a copolymer obtained by introducing a comonomer into the polycarboxylic acid (salt), and polysaccharides having a carboxy group such as carboxymethyl cellulose or an ionic salt thereof.

The cationic polymer is a more preferred material from the perspective of improving adhesion. Since the cationic polymer is water-soluble similarly to the anionic polymer mentioned above, it is more preferred to impart water resistance thereto by permitting it to form a crosslinked structure. The crosslinking agent that can be used for forming a crosslinked structure in the cationic polymer may include ones mentioned in the section on the anionic polymer. If a rare-earth oxide sol is used as the anticorrosion treatment layers 14a and 14b, a cationic polymer may be used for protective layers thereof, instead of using the anionic polymer mentioned above.

In order to form a gradient structure in each of the anticorrosion treatment layers with an aluminum foil through chemical conversion treatment represented by a chromate treatment, chemical conversion treatment layers are formed on the aluminum foil by treating the aluminum foil using a chemical conversion treatment agent containing, in particular, hydrofluoric acid, hydrochloric acid, nitric acid, sulfuric acid, or a salt thereof, followed by reaction with a chromium- or non-chromium-based compound. However, the chemical conversion treatment, which uses an acid as a chemical conversion treating agent, causes deterioration of the working environment and corrosion of the coating device. In this regard, the coating-type anticorrosion treatment layers 14a and 14b mentioned above do not need to form a gradient structure relative to the barrier layer 13 of an aluminum foil, unlike the anticorrosion treatment layers obtained through the chemical conversion treatment represented by a chromate treatment. Therefore, the properties of the coating agent are not restricted in terms of acidity, alkalinity, neutrality and the like, and a good working environment can be achieved. In addition, since an alternative to chromate treatment using a chromium compound is being sought from the perspective of environmental health, the coating-type anticorrosion treatment layers 14a and 14b are preferred to be used.

Based on the above, the following combinations as examples may be used in the coating-type anticorrosion treatment mentioned above: (1) rare-earth oxide sol alone, (2) anionic polymer alone, (3) cationic polymer alone, (4) rare-earth oxide sol + anionic polymer (laminated composite), (5) rare-earth oxide sol + cationic polymer (laminated composite), (6) rare-earth oxide sol + anionic polymer (laminated composite) / cationic polymer (multilayered), (7) rare-earth oxide sol + cationic polymer (laminated composite) / anionic polymer (multilayered), and other combinations. Of these combinations, (1) and (4) to (7) are preferred, and (4) to (7) are more preferred. However, the present embodiment is not limited to the above combinations. For example, the following selection can be made for the anticorrosion treatment. Specifically, since the cationic polymer is a highly preferred material from the perspective of exhibiting high adhesion to a modified polyolefin resin, as will be described later for the second adhesive layer, adhesive resin layer, or sealant layer, each anticorrosion treatment layer can be designed to contain a cationic polymer at the surface thereof contacting the second adhesive layer, adhesive resin layer, or sealant layer (e.g., combinations (5) and (6), etc.) if the second adhesive layer, adhesive resin layer, or sealant layer is formed of a modified polyolefin resin.

The anticorrosion treatment layers 14a and 14b are not limited to the layers mentioned above. For example, the anticorrosion treatment layers 14a and 14b may be formed using a treatment agent which is obtained by adding a phosphoric acid and a chromium compound to a resin binder (such as aminophenol), as in the coating-type chromate based on the known art. If this treatment agent is used, the layers will have a corrosion prevention function balanced with adhesion. Although it is necessary to consider stability of the coating liquid, a coating agent may be prepared in advance by integrating a rare-earth oxide sol with a polycationic polymer or a polyanionic polymer, for use as layers having a corrosion prevention function balanced with adhesion.

Regardless of whether the structure is a multilayer structure or a monolayer structure, mass per unit area of the anticorrosion treatment layers 14a and 14b is preferred to be 0.005 g/m$^2$ to 0.200 g/m$^2$, and more preferred to be 0.010 g/m$^2$ to 0.100 g/m$^2$. If the mass per unit area is 0.005 g/m$^2$ or more, a corrosion prevention function can be readily imparted to the barrier layer 13. Even if the mass per unit area exceeds 0.200 g/m$^2$, the corrosion prevention function substantially remains unchanged. If a rare-earth oxide sol is used and if the coating is thick, heat-curing during drying may become insufficient, and the cohesive force may be reduced. It should be noted that the thickness of each of the anticorrosion treatment layers 14a and 14b can be converted from its specific gravity.

From the perspective of easily maintaining adhesion between the sealant layer and the barrier layer, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or they may be formed by applying chemical conversion treatment to the barrier layer 13, or they may be formed by applying chemical conversion treatment to the barrier layer 13 and contain a cationic polymer.

<Second adhesive layer 12b>

The second adhesive layer 12b adheres the barrier layer 13 to the sealant layer 16. A general purpose adhesive for bonding a barrier layer 13 to a sealant layer 16 may be used for the second adhesive layer 12b.

If a second anticorrosion treatment layer 14b is provided on the barrier layer 13 and has a layer containing at least one polymer selected from the group consisting of a cationic polymer and an anionic polymer mentioned above, the second adhesive layer 12b is preferred to contain a compound having reactivity (also termed reactive compound hereinafter) with the polymer contained in the second anticorrosion treatment layer 14b.

For example, if the second anticorrosion treatment layer 14b contains a cationic polymer, the second adhesive layer 12b may contain a compound that is reactive with the cationic polymer. If the second anticorrosion treatment layer 14b contains an anionic polymer, the second adhesive layer 12b may contain a compound that is reactive with the anionic polymer. Also, if the second anticorrosion treatment layer 14b contains both of a cationic polymer and an anionic polymer, the second adhesive layer 12b may contain a compound that is reactive with the cationic polymer and a compound that is reactive with the anionic polymer. However, the second adhesive layer 12b does not necessarily need to contain the two kinds of compounds, but may contain a compound that is reactive with both the cationic polymer and the anionic polymer. The expression "reactive with" refers to forming a covalent bond with a cationic polymer or an anionic polymer. The second adhesive layer 12b may further contain an acid-modified polyolefin resin.

The compound reactive with a cationic polymer may be at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, or the compound having an oxazoline group may be the polyfunctional isocyanate compound, the glycidyl compound, the compound having a carboxy group, the compound having an oxazoline group, or the like exemplified above as a crosslinking agent for converting a cationic polymer into a crosslinked structure. Of these compounds, a polyfunctional isocyanate compound is preferred from the perspective of being highly reactive with a cationic polymer and being readily formed into a crosslinked structure.

The compound reactive with an anionic polymer may be at least one compound selected from the group consisting of a glycidyl compound and a compound having an oxazoline group. The glycidyl compound or the compound having an oxazoline group may be the glycidyl compound, the compound having an oxazoline group, or the like, exemplified above as a crosslinking agent for converting a cationic polymer into a crosslinked structure. Of these compounds, a glycidyl compound is preferred from the perspective of being highly reactive with an anionic polymer.

If the second adhesive layer 12b contains an acid-modified polyolefin resin, it is preferred that the reactive compound is also reactive with the acidic group in the acid-modified polyolefin resin (i.e., forms a covalent bond with the acidic group). Thus, adhesion to the second anticorrosion treatment layer 14b is further enhanced. In addition, the acid-modified polyolefin resin is converted into a crosslinked structure to further improve solvent resistance of the packaging material 10.

The content of the reactive compound is preferred to be 1 to 10 equivalents of the acidic group in the acid-modified polyolefin resin. If the content is 1 equivalent or more, the reactive compound sufficiently reacts with the acidic group in the acid-modified polyolefin resin. If the content exceeds 10 equivalents, sufficient saturation is reached as a crosslinking reaction with the acid-modified polyolefin resin, and therefore unreacted substances may remain, deteriorating various performances. Accordingly, for example, the content of the reactive compound is preferred to be 5 parts by mass to 20 parts by mass relative to 100 parts by mass of the acid-modified polyolefin resin (solid content ratio).

The acid-modified polyolefin resin is obtained by introducing an acid group into a polyolefin resin. The acid group may be a carboxy group, sulfonic acid group, acid anhydride group, or the like, and in particular, a maleic anhydride group or (meth)acrylic acid group is preferred. The acid-modified polyolefin resin may be, for example, the same resins as those which will be mentioned later as a modified polyolefin resin used for an adhesive resin layer 15 or the sealant layer 16.

Various additives such as a flame retardant, slip agent, antiblocking agent, antioxidant, light stabilizer, tackifier, and the like may be added to the second adhesive layer 12b.

From the perspective of minimizing reduction in laminate strength (e.g., reduction in laminate strength in the case where corrosive gas such as of hydrogen sulfide or an electrolyte is involved) and further minimizing deterioration of insulation properties, the second adhesive layer 12b may contain, for example, an acid-modified polyolefin, and at least one curing agent selected from the group consisting of a polyfunctional isocyanate compound, a glycidyl compound, a compound having a carboxy group, a compound having an oxazoline group, and a carbodiimide compound. Examples of the carbodiimide compound may include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide.

The adhesive used for forming the second adhesive layer 12b may be, for example, a polyurethane-based adhesive obtained by mixing a polyester polyol containing hydrogenated dimer fatty acid and diol with a polyisocyanate. The adhesive may be a polyurethane resin obtained by having a bifunctional or higher isocyanate compound acted on a base resin such as a polyester polyol, polyether polyol, acrylic polyol, or carbonate polyol, an epoxy resin obtained by having an amine compound or the like acted on a base resin having an epoxy group, or other resins. These resins are preferred from the perspective of heat resistance.

The thickness of the second adhesive layer 12b is not particularly limited, but from the perspective of obtaining desired adhesive strength, processability, and the like, the thickness is preferred to be 1 μm to 10 μm, more preferred to be 2 μm to 7 μm, and even more preferred to be 3 μm to 7 μm.

<Sealant layer 16>

The sealant layer 16 imparts sealability to the packaging material 10 by heat sealing. The sealant layer 16 is arranged innermost and heat sealed (fused) when assembling a power storage device.

«First aspect of sealant layer 16»

In the packaging material 10 according to a first aspect of the present embodiment, the sealant layer 16 contains a component (A) that is a compound containing polyolefin units and having a melting point of 175°C or more or a glass transition temperature of 75°C or more, and a component (B) that is at least one resin selected from the group consisting of a polyethylene resin and a polypropylene resin.

If the sealant layer is a monolayer as shown in Fig. 1, the sealant layer contains the components (A) and (B). If the sealant layer includes two or more layers, at least one layer may need to include the components (A) and (B). In this case, it is preferred that at least the innermost layer (the layer located farthest from the substrate layer 11) contains the components (A) and (B). The sealant layer 16 may further contain a component (C) that is a compatibilizer having a site compatible with the component (A) and a site compatible with the component (B). Also, the sealant layer 16 may further contain a hydrogen sulfide adsorbent.

(Component (A))

The component (A) is a compound containing polyolefin units and having a melting point (Tm) of 175°C or more or a glass transition temperature (Tg) of 75°C or more. The polyolefin units may be, for example, polyethylene units, polypropylene units, polybutylene units, or the like. The component (A) is preferred to be a copolymer obtained by copolymerizing an olefin with another copolymerizable monomer. The component (A) may be, for example, a polyamide/polyolefin graft copolymer, cycloolefin/olefin copolymer (cycloolefin copolymer), or the like.

The polyamide/polyolefin graft copolymer may be, for example, a polyamide-polyethylene graft copolymer. Commercially available products of the polyamide/polyolefin graft copolymer may be Apolhya LP2 (melting point: 216°C) or Apolhya P21H (melting point: 216°C) manufactured by Arkema, Inc., and the like.

The cycloolefin copolymer may be, for example, an ethylene/cycloolefin copolymer. Commercially available products of the cycloolefin copolymer may be APEL manufactured by Mitsui Chemicals, Inc., TOPAS manufactured by Topas Advanced Polymers GmbH, and the like. The APEL may include APL6509 (Tg: 80°C), APL6011T (Tg: 105°C), APL6013T (Tg: 125°C), APL6015T (Tg: 145°C), or the like.

The component (A) is a compound having a melting point of 175°C or more or a glass transition temperature of 75°C or more. If the component (A) having a melting point of 175°C or more or a glass transition temperature of 75°C or more is used, the sealant layer 16 can obtain sufficient heat seal strength at a heat sealing temperature of about 200°C, and can maintain sufficient heat seal strength under high temperature (e.g., about 150°C) conditions. The component (A) may be a compound having a melting point of 175°C or more and a glass transition temperature of 75°C or more. If a compound having a melting point of less than 175°C and a glass transition temperature of less than 75°C, or a compound having a melting point of less than 175°C and no glass transition temperature, or a compound having a glass transition temperature of less than 75°C and no melting point is used, sufficient heat seal strength cannot necessarily be secured under high temperature (about 150°C) conditions.

From the perspective of further improving heat seal strength under high temperature (about 150°C) conditions, the component (A) may have a melting point of 180°C or more, 190°C or more, 200°C or more, or 210°C or more. From the perspective of achieving more sufficient heat seal strength at a heat sealing temperature of about 200°C, the component (A) may have a melting point of 250°C or less or 240°C or less.

From the perspective of further improving heat seal strength under high temperature (e.g., about 150°C) conditions, the component (A) may have a glass transition temperature of 80°C or more, 90°C or more, 100°C or more, or 120°C or more. From the perspective of achieving more sufficient heat seal strength at a heat sealing temperature of about 200°C, the component (A) may have a glass transition temperature of 200°C or less, or preferably 180°C or less.

The content of the component (A) in the sealant layer 16 is preferred to be 5 parts by mass to 100 parts by mass, more preferred to be 10 parts by mass to 90 parts by mass, and even more preferred to be 20 parts by mass to 80 parts by mass, relative to 100 parts by mass of the component (B). If the content of the component (A) is 5 parts by mass or more, high heat seal strength can be sufficiently secured even under high temperature conditions, and if it is 100 parts by mass or less, more sufficient heat seal strength can be achieved at a heat sealing temperature of about 200°C, while minimizing reduction in flexibility of the sealant layer and minimizing embrittlement due to reduction in flexibility.

(Component (B))

The component (B) is at least one resin selected from the group consisting of a polyethylene resin and a polypropylene resin. The component (B) is a base resin of the sealant layer 16.

The polyethylene resin may be, for example, a high density polyethylene, branched low density polyethylene, linear low density polyethylene, or the like. Of these resins, a branched low density polyethylene or a linear low density polyethylene is preferred, and a branched low density polyethylene is more preferred, from the perspective of film formability.

The polypropylene resin is a polymerized monomer containing propylene. The polypropylene resin may be a homopolypropylene, random polypropylene, or the like. From the perspective of basic performance such as heat seal strength of packaging materials, the polypropylene resin is preferred to be a random polypropylene, and more preferred to be a propylene-ethylene random copolymer. The propylene-ethylene random copolymer has good heat sealability at low temperatures. Thus, use of the component (A) can minimize increase of heat sealing temperature required for achieving sufficient heat seal strength, and can achieve sufficient heat seal strength at a heat sealing temperature of about 200°C.

The propylene-ethylene random copolymer is preferred to have an ethylene content of 0.1 mass% to 10 mass%, more preferably 1 mass% to 7 mass%, and even more preferably 2 mass% to 5 mass%. If the ethylene content is 0.1 mass% or more, copolymerization of the ethylene may tend to achieve impact resistance and improve seal strength or blushing resistance. If the ethylene content is 10 mass% or less, the melting point may be prevented from being excessively lowered, and development of excessively sealed portions may be more sufficiently minimized. It should be noted that the ethylene content can be calculated from the mixing ratio of the monomer when polymerized.

The melting point of the propylene-ethylene random copolymer is preferred to be 120°C to 160°C, and more preferred to be 125°C to 160°C. If the melting point is 120°C or more, development of excessively sealed portions may be more sufficiently minimized.

The propylene-ethylene random copolymer may be one which has been acid-modified, and thus may be, for example, an acid-modified propylene-ethylene random copolymer obtained by graft-modifying a maleic anhydride. Use of the acid-modified propylene-ethylene random copolymer can maintain adhesion to the tab leads without the need of using a tab sealant.

Such propylene-ethylene random copolymers may be used singly, or in combination of two or more.

(Component (C))

In order to improve compatibility between the components (A) and (B), the sealant layer 16 may further contain a component (C) that is a compatibilizer having a site compatible with the component (A) and a site compatible with the component (B). The component (C) is suitably used if the component (A) is incompatible with the component (B). If the component (A) is incompatible with the component (B), the sealant layer 16 will have a sea-island structure in which the component (A) is dispersed in the component (B) as a base resin. However, addition of the compatibilizer can improve adhesive strength at the interfaces of the structure to further improve heat seal strength.

If the component (B) is a polypropylene resin such as a propylene-ethylene random copolymer, and the component (A) is a copolymer, such as a polyamide/polyethylene graft copolymer or an ethylene/cycloolefin copolymer, containing polyethylene units, the component (C) that can be used may be a compatibilizer having a site compatible with the polypropylene resin and a site compatible with the copolymer containing the polyethylene units.

The component (C) that can be used may be, for example, a block copolymer which is composed of polyethylene units formed of a polyethylene or ethylene $\alpha$-olefin copolymer and polypropylene units formed of a polypropylene or propylene $\alpha$-olefin copolymer, a block copolymer which is composed of polyethylene units and ethylene-butylene copolymer units, or a block copolymer which is composed of polyethylene units and ethylene 1-octene copolymer units. Such a block copolymer may have a structure that is any of a diblock copolymer, triblock copolymer, and multiblock copolymer. If the component (B) is the polypropylene resin and the component (A) is the copolymer containing the polyethylene units, use of the above block copolymer as the component (C) can make the polypropylene resin as the component (B) compatible with the propylene units, the ethylene-butylene copolymer units, or the ethylene 1-octene copolymer units of the component (C), and can make the polyethylene units of the component (A) compatible with the polyethylene units of the component (C).

The compatibilizers mentioned above may be used singly or in combination of two or more.

If the sealant layer 16 contains the component (C), the content of the component (C) in the sealant layer 16 is preferred to be 1 part by mass to 40 parts by mass, more preferred to be 2 parts by mass to 25 parts by mass, even more preferred to be 2 parts by mass to 20 parts by mass, and most preferred to be 7 parts by mass to 15 parts by mass, relative to 100 parts by mass of the total of the components (A) and (B). If the content of the component (C) is 1 part by mass or more, adhesive strength at the sea-island interfaces can be easily improved, and the effect of improving heat seal strength can be easily achieved. If the content of the component (C) is 40 parts by mass or less, reduction in cohesive force and heat seal strength of the entire sealant layer 16 can be easily minimized.

If the sealant layer 16 is formed of a plurality of layers, the component (C) is preferred to be added to all of the layers; however, it may be added to at least one layer to achieve the effect of improving heat seal strength as mentioned above.

(Hydrogen sulfide adsorbent)

The sealant layer 16 may further contain a hydrogen sulfide adsorbent. If the sealant layer 16 contains a hydrogen sulfide adsorbent, hydrogen sulfide, which can be produced in the fully solid-state battery that uses a sulfide-based solid electrolyte, can be trapped and detoxified by the sealant layer 16. It is true that even when the hydrogen sulfide adsorbent is added to the second adhesive layer 12b or the adhesive resin layer 15 described later, advantageous effects similar to the above can be achieved; however, a much higher effect of adsorbing hydrogen sulfide can be achieved by having the sealant layer 16 as the innermost layer contained the hydrogen sulfide adsorbent. When the substrate layer 11 side of the packaging material 10 is outside and the sealant layer 16 side thereof is inside, the hydrogen sulfide adsorbent is preferred to be contained in at least one of the layers located further inside than the barrier 13, but may be contained in at least one of the layers located further outside than the barrier layer 13. For example, the first adhesive layer 12a may contain the hydrogen sulfide adsorbent.

Examples of the hydrogen sulfide adsorbent may include zinc oxide, amorphous metal silicates (in which the metal is mainly copper or zinc), hydrates of zirconium and/or lanthanoid elements, tetravalent metal phosphates (particularly in which the metal is copper), mixtures of zeolite and zinc ions, mixtures of zeolite, zinc oxide and copper(II) oxide, potassium permanganate, sodium permanganate, silver sulfate, silver acetate, aluminum oxide, iron hydroxide, isocyanate compound, aluminum silicate, aluminum potassium sulfate, zeolites, activated carbon, amine compounds, and ionomers. Of these materials, zinc oxide is preferred from the perspective of easily detoxifying hydrogen sulfide, cost, and handleability. These hydrogen sulfide adsorbents may be used singly or in combination of two or more.

If the sealant layer 16 contains a hydrogen sulfide adsorbent, the content thereof in the sealant layer 16 is preferred to be 0.01 mass% to 30 mass%, and more preferred to be 0.1 mass% to 20 mass%, relative to the total solid content of the sealant layer 16. If the content of the hydrogen sulfide adsorbent is less than 0.01 mass%, the effect of detoxifying hydrogen sulfide is low, and if it exceeds 30 mass%, physical properties, such as seal strength, of the sealant layer 16 tend to be deteriorated.

(Additive components)

The sealant layer 16 may further contain additive components other than the components mentioned above.

The additive components may be, for example, a polyolefin elastomer. The polyolefin elastomer may have or may not have compatibility with the component (B); however, both of a compatible polyolefin elastomer having compatibility and an incompatible polyolefin elastomer not having compatibility may be contained. Having compatibility (compatible) refers to being dispersed in the component (B) in a dispersed phase size of 1 nm or more and less than 500 nm. Not having compatibility (incompatible) refers to being dispersed in the component (B) in a dispersed phase size of 500 nm or more and less than 20 μm.

If the component (B) is a polypropylene resin, the compatible polyolefin elastomer may be, for example, a propylene-butene-1 random copolymer, and the incompatible polyolefin elastomer may be, for example, an ethylene-butene-1 random copolymer. Such polyolefin elastomers can be used singly or in combination of two or more.

If the sealant layer 16 contains a polyolefin elastomer, the content thereof in the sealant layer 16 is preferred to be 5 mass% to 40 mass%, and more preferred to be 10 mass% to 40 mass%, relative to the total solid content of the sealant layer 16. If the content of the polyolefin elastomer is 5 mass% or more, sufficient improvement in sealing characteristics can be achieved, and if it is 40 mass% or less, reduction in heat resistance of the sealant layer 16 can be minimized.

The sealant layer 16 may contain, for example, a slip agent, antiblocking agent, antioxidant, light stabilizer, and flame retardant, as additive components. The content of these additive components is preferred to be 5 parts by mass or less when the total mass of the sealant layer 16 is taken to be 100 parts by mass.

The thickness of the sealant layer 16 is not particularly limited but, from the perspective of volume energy density as a battery, the thickness is preferred to be in the range of 5 μm to 150 μm, more preferred to be in the range of 10 μm to 120 μm, and even more preferred to be in the range of 20 μm to 100 μm.

«Second aspect of sealant layer 16»

In the packaging material 10 according to the second aspect of the present embodiment, the sealant layer 16 contains a polyolefin as a first resin, and at least one resin, as a second resin, selected from the group consisting of a polyester, a polyamide, a polycarbonate, and a polyphenylene ether.

Examples of the polyolefin may include a polyethylene such as a low density polyethylene (LDPE), linear low density polyethylene (LLDPE), medium density polyethylene (MDPE), or high density polyethylene (HDPE); ethylene-α-olefin copolymer; polypropylene; block or random copolymer containing a propylene as a copolymer component; propylene-α-olefin copolymer; and polybutene. Of these polyolefins, a polypropylene is preferred, and a block polypropylene (block PP) is more preferred, from the perspective of heat resistance or flexibility. The polyolefins mentioned above may be used singly or may be used as a mixture of two or more.

The polyolefin is preferred to contain a modified polyolefin having a polar group which can react with the second resin. The second resin may have a functional group as mentioned below. If the second resin is a polyester, the functional group may be, for example, a terminal hydroxyl group, terminal carboxyl group, or ester bond. If the second resin is a polyamide, the functional group may be, for example, a terminal amino group or amide bond. If the second resin is a polycarbonate, the functional group may be, for example, a terminal hydroxyl group. If the second resin is a polyphenylene ether, the functional group may be, for example, a terminal hydroxyl group.

If the second resin is a polyester or a polycarbonate, the polar group that can react with the functional group of the second resin may be, for example, a hydroxyl group, acid-modified (ester) group, aldehyde group, oxazoline group, glycidyl group, amide group, or imino group. If the second resin is a polyamide, the polar group may be, for example, a hydroxyl group, acid-modified (ester) group, aldehyde group, or glycidyl group. If the second resin is a polyphenylene ether, the polar group may be, for example, an acid-modified (ester) group, oxazoline group, glycidyl group, amide group, or imino group.

As the modified polyolefin having a hydroxyl group as a polar group, Poval manufactured by Kuraray Co.,Ltd, Melthene-H manufactured by Tosoh Corporation, and the like are commercially available. As the modified polyolefin having a glycidyl group as a polar group, MODIPER manufactured by NOF Corporation, LOTADER and BONDINE manufactured by Arkema, Inc., and the like are commercially available. As the modified polyolefin having an amide group as a polar group, APOLHYA manufactured by Arkema, Inc., and the like are commercially available. As the modified polyolefin having an imino group as a polar group, ADMER IP manufactured by Mitsui Chemicals, Inc., and the like are commercially available. As the modified polyolefin having an oxazoline group as a polar group, EPOCROS manufactured by Nippon Shokubai Co., Ltd., and the like are commercially available.

The modified polyolefin modified by an acid may be a polyolefin modified by any one of an unsaturated carboxylic acid, acid anhydride of an unsaturated carboxylic acid, and ester of an unsaturated carboxylic acid.

Specifically, examples of the unsaturated carboxylic acid may include an acrylic acid, methacrylic acid, maleic acid, fumaric acid, itaconic acid, citraconic acid, tetrahydrophthalic acid, and bicyclo[2,2,1]hept-2-ene-5,6-dicarboxylic acid.

Examples of the acid anhydride of an unsaturated carboxylic acid may include a maleic anhydride, itaconic anhydride, citraconic anhydride, tetrahydrophthalic anhydride, and bicyclo[2,2,1]hept-2-ene-5,6-dicarboxylic acid anhydride.

Examples of the ester of an unsaturated carboxylic acid may include methyl acrylate, methyl methacrylate, ethyl methacrylate, butyl methacrylate, dimethyl maleate, monomethyl maleate, diethyl fumarate, dimethyl itaconate, diethyl citraconate, dimethyl tetrahydrophthalic anhydride, and bicyclo[2,2,1]hept-2-ene-5,6-dimethyl dicarboxylate.

Specific examples of the products of the acid-modified polyolefin may be as follows. The polyolefin modified by maleic anhydride may be, for example, ADMER manufactured by Mitsui Chemicals, Inc., Modic manufactured by Mitsubishi Chemical Corporation, TOYOTAC manufactured by Toyobo Co., Ltd., SANSTACK manufactured by Sanyo Chemical, Ltd., and the like. The acid-modified polyolefin having a carboxyl group as a polar group may be, for example, NUCREL and HIMILAN manufactured by Mitsui Du Pont Polychemical Co., Ltd., and the like (Ionomer type can also be used). The acid-modified polyolefin having an ester group as a polar group may be, for example, EVAFLEX manufactured by Mitsui Du Pont Polychemical Co., Ltd., LOTADER, BONDINE and EVATANE manufactured by Arkema, Inc., and the like.

As the acid-modified polyolefin, a polyolefin modified by maleic anhydride is preferred. These modified polyolefins mentioned above may be used singly or may be used as a mixture of two or more.

The polyester as the second resin may be one obtained by reaction of an acid component with a glycol component. The acid component may be phthalic acid, terephthalic acid, isophthalic acid, naphthalenedicarboxylic acid, cyclohexanedicarboxylic acid, adipic acid, sebacic acid, or the like. The glycol component may be ethylene glycol, butanediol, pentanediol, hexanediol, neopentyl glycol, diethylene glycol, polytetramethylene glycol, cyclohexanedimethanol, propanediol, or the like. Specifically, the polyester may be polyethylene terephthalate (PET), polybutylene terephthalate (PBT), polycyclohexanedimethylene terephthalate (PCT), or the like.

The polyamide as the second resin may be a nylon-based polyamide such as nylon 6, nylon 11, nylon 12, and nylon 6,6, an aramid-based polyamide having aromatic character, or the like.

If polyester and/or polyamide are used as the second resin, the polyester and/or polyamide are preferred to have a crystallinity of 10% or more and less than 70% after heat sealing the sealant layer 16 containing the polyester and/or polyamide for 3 seconds under conditions of 260°C and 0.5 MPa followed by cooling to 25°C. If the crystallinity of the polyester and/or polyamide measured using the above method is excessively low, heat seal strength under high temperature conditions tends to be reduced, and if it is excessively high, flexibility tends to be reduced. From the perspective of balancing heat seal strength under high temperature conditions with flexibility, the above crystallinity is preferred to be 15% or more and less than 50%. Since polycarbonates and polyphenylene ethers are amorphous materials, there is no preferred range of crystallinity.

The second resins may be used singly or may be used as a mixture of two or more.

The content of the first resin in the sealant layer 16 is preferred to be 10 mass% to 80 mass%, more preferred to be 20 mass% to 70 mass%, and even more preferred to be 40 mass% to 60 mass%, relative to the total amount of the first and second resins in the sealant layer 16. If the content of the first resin is 10 mass% or more, high heat seal strength can be sufficiently and easily secured under room temperature conditions after exposure to high temperature conditions, and if it is 80 mass% or less, much higher heat seal strength can be easily secured under high temperature conditions. It should be noted that the first and second resins may be melted and kneaded in advance using a kneader or the like.

The content of the modified polyolefin in the first resin is preferred to be 0.1 mass% to 100 mass%, and more preferred to be 0.5 mass to 40 mass relative to the total amount of the first resin. If the content of the modified polyolefin is 0.1 mass% or more, the polar group of the modified polyolefin can easily react with the functional group of the second resin, and compatibility between the first and second resins can be easily improved. The content of the modified polyolefin in the first resin may be 100 mass%; however, if the melting point of the modified polyolefin is low, heat seal strength may be reduced under high temperature conditions, and therefore, the content is preferred to be 40 mass% or less.

The sealant layer 16 may contain components other than the first and second resins. For example, the sealant layer 16 may contain an elastomer from the perspective of imparting impact resistance. In order to impart sealability, heat resistance, and other functions, the sealant layer 16 may contain additives such as an antioxidant, slip agent, flame retardant, antiblocking agent, light stabilizer, dehydrating agent, tackifier, crystal nucleating agent, and the like.

The sealant layer 16 may be a monolayer film or may be a multilayer film, and may be selected according to the required properties. If the sealant layer 16 has a multilayer structure, the layers may be laminated using coextrusion, or may be laminated using dry lamination. If the sealant layer 16 has a multilayer structure, at least one of the layers may include the first and second resins; however, from the perspective of more sufficiently achieving the effects of the present disclosure, all the layers may contain the first and second resins.

The sealant layer 16 is preferred to have a thickness (total thickness if multilayered) of 10 $\mu$m to 150 $\mu$m, and more preferably 20 $\mu$m to 100 $\mu$m. If the thickness of the sealant layer 16 is 10 $\mu$m or more, sufficient heat seal strength can be achieved, and if it is 150 $\mu$m or less, the amount of water vapor penetrating from ends of the packaging material can be reduced.

The peak melting temperature of the sealant layer depends on usage. In the case of a packaging material for a fully solid-state battery, the peak melting temperature of the sealant layer is preferred to be 160°C to 280°C from the perspective of improving heat resistance.

Preferred embodiments of the packaging material for a power storage device of the present embodiment have been described in detail so far. However, the present disclosure is not limited to such specific embodiments, but can be modified and/or changed in various ways within the spirit of the present disclosure recited in the claims.

For example, Fig. 1 shows the case where the anticorrosion treatment layers 14a and 14b are provided to both respective surfaces of the barrier layer 13; however, only either one of the anticorrosion treatment layers 14a and 14b may be provided to the barrier layer 13, or no anticorrosion treatment layers may be provided thereto.

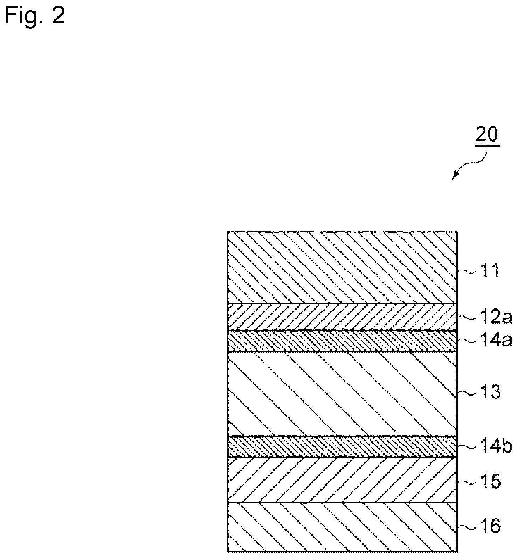

Although Fig. 1 shows the case where the barrier layer 13 is laminated with the sealant layer 16 using the second adhesive layer 12b, the barrier layer 13 may be laminated with the sealant layer 16 using an adhesive resin layer 15 as in a packaging material 20 for a power storage device shown in Fig. 2. In the packaging material 20 for a power storage device shown in Fig. 2, a second adhesive layer 12b may be provided between the barrier layer 13 and the adhesive resin layer 15.

<Adhesive resin layer 15>

The adhesive resin layer 15 is composed of an adhesive resin composition as a main component and, as necessary, additive components. The adhesive resin composition is not particularly limited, but is preferred to contain a modified polyolefin resin.

The modified polyolefin resin is preferred to be a polyolefin resin graft-modified by an unsaturated carboxylic acid, and an unsaturated carboxylic acid derivative derived from either of an acid anhydride and ester of the unsaturated carboxylic acid.

Examples of the polyolefin resin may include a low density polyethylene, medium density polyethylene, high density polyethylene, ethylene-$\alpha$-olefin copolymer, homopolypropylene, block polypropylene, random polypropylene, and propylene-$\alpha$-olefin copolymer.

The modified polyolefin resin is preferred to be a polyolefin resin modified by maleic anhydride. As the modified polyolefin resin, for example, ADMER manufactured by Mitsui Chemicals, Modic manufactured by Mitsubishi Chemical Corporation, and the like are suitable. Such modified polyolefin resins have good reactivity with various types of metal and polymers having various functional groups, and thus, adhesion can be imparted to the adhesive resin layer 15 using the reactivity. As necessary, the adhesive resin layer 15 may contain, for example, various additives such as various compatible and incompatible elastomers, flame retardants, slip agents, antiblocking agents, antioxidants, light stabilizers, and tackifiers.

The thickness of the adhesive resin layer 15 is not particularly limited, but is preferred to be equal to or less than that of the sealant layer 16, from the perspective of stress relaxation and moisture permeation.

In the packaging material 20 for a power storage device, the total thickness of the adhesive resin layer 15 and the sealant layer 16 is preferred to be in the range of 5 $\mu$m to 150 $\mu$m, and more preferred to be in the range of 20 $\mu$m to 100 $\mu$m, from the perspective of balancing film thickness reduction with improvement of heat seal strength under high temperature conditions.

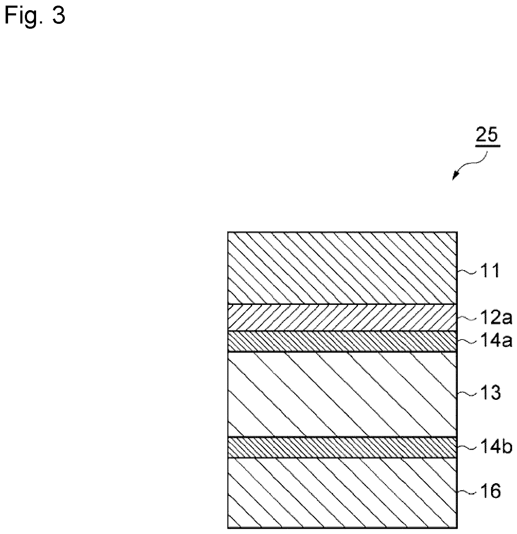

Although Fig. 1 shows the case where the barrier layer 13 is laminated with the sealant layer 16 using the second adhesive layer 12b, the sealant layer 16 and the barrier layer 13 may be directly laminated with each other without intervention of the second adhesive layer 12b, as in a packaging material 25 for a power storage device shown in Fig. 3. In the packaging device according to the second aspect of the present disclosure as well, high adhesion can be achieved between the sealant layer 16 and the barrier layer 13 if the sealant layer 16 contains the first and second resins. This is because the polyester, polyamide, or the like, as the second resin, has adhesiveness to the barrier layer. If the first resin has a polar group, adhesion between the sealant layer 16 and the barrier layer 13 can be further improved.

<Hydrogen sulfide adsorbent>

If the packaging material 10, 20 or 25 of the present embodiment is applied to a fully solid-state battery, hydrogen sulfide may be produced due to reaction of the fully solid-state electrolyte with moisture, depending on the type of the fully solid-state electrolyte. Therefore, a material that can decompose or adsorb hydrogen sulfide (hydrogen sulfide adsorbent) may be added to the packaging material 10, 20 or 25. The hydrogen sulfide adsorbent can be added to, for example, at least any one of the first adhesive layer 12a, the second adhesive layer 12b, the adhesive resin layer 15, and the sealant layer 16. When the substrate layer 11 side of the packaging material 10, 20 or 25 is outside and the sealant layer 16 side thereof is inside, the hydrogen sulfide adsorbent is preferred to be added to at least one of layers located further inside than the barrier layer 13, from the perspective of easily adsorbing hydrogen sulfide produced inside the packaging material 10, 20 or 25, and is particularly preferred to be added to the sealant layer 16 to achieve higher effects.

As the hydrogen sulfide adsorbent, those which mentioned in the description on the first aspect of the sealant layer 16 can be used.

The layer to which the hydrogen sulfide adsorbent is added may have a monolayer structure or a multilayer structure. If the hydrogen sulfide adsorbent is added to the sealant layer 16, a highly concentrated material may be prepared in advance as a masterbatch, and then the masterbatch may be added to the resin of the sealant layer 16 to achieve a suitable concentration. If the hydrogen sulfide adsorbent is added to the first adhesive layer 12a or the second adhesive layer 12b and if these layers are formed by applying an adhesive, the hydrogen sulfide adsorbent may be directly added to the coating liquid, and if the layers are formed by extrusion or the like, a masterbatch may be prepared and added as in the case of the sealant layer 16. The resin used for preparing a masterbatch may be a thermoplastic resin such as a polyolefin, polyamide, polyester, polycarbonate, polyphenylene ether, polyacetal, polystyrene, polyvinyl chloride, polyvinyl acetate, or the like.

In order to impart dispersibility, sealability, heat resistance, and other functions when adding the hydrogen sulfide adsorbent, other additives may be added, such as a dispersant, antioxidant, slip agent, flame retardant, antiblocking agent, light stabilizer, dehydrating agent, tackifier, crystal nucleating agent, and plasticizer.

The content of the hydrogen sulfide adsorbent is preferred to be 0.01 mass% to 30 mass%, and more preferred to be 0.1 mass% to 20 mass%, relative to the total solid content of the layer to which it is added. This is because, if the content of the hydrogen sulfide adsorbent is less than 0.01 mass%, the effect of detoxifying hydrogen sulfide is low, and if it exceeds 30 mass%, physical properties of the layer to which it is added tend to be deteriorated.

[Method for producing packaging material]

Next, an example of a method of producing the packaging material 10 shown in Fig. 1 will be described. The method of producing the packaging material 10 is not limited to the method described below.

The method of producing the packaging material 10 of the present embodiment includes a step of providing the anticorrosion treatment layers 14a and 14b to the barrier layer 13, a step of bonding the substrate layer 11 and the barrier layer 13 using the first adhesive layer 12a, a step of preparing a laminate by further laminating the sealant layer 16 via the second adhesive layer 12b, and, as necessary, a step of aging the obtained laminate.

(Step of laminating anticorrosion treatment layers 14a and 14b to barrier layer 13)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying a coating agent having a corrosion prevention performance onto the barrier layer 13.

If the anticorrosion treatment layers 14a and 14b are each a multilayer, for example, a coating liquid (coating agent) for forming an underlayer-side (barrier layer 13-side) anticorrosion treatment layer may be applied to the barrier layer 13, followed by baking to form a first layer, and then, a coating liquid (coating agent) for forming an overlayer-side anticorrosion treatment layer may be applied to the first layer, followed by baking to form a second layer.

The degreasing treatment may be performed using a spraying method or an immersion method. The hydrothermal modification treatment or the anodic oxidation treatment may be performed using an immersion method. The chemical conversion treatment may be performed by appropriately selecting an immersion method, a spraying method, a coating method, or the like depending on the type of chemical conversion treatment.

Various methods such as gravure coating, reverse coating, roll coating, and bar coating may be used as the method of applying the coating agent having corrosion prevention performance.

As stated above, these treatments may be applied to both surfaces or one surface of a metal foil. If one surface is treated, the surface is preferred to be at a side on which the sealant layer 16 is to be laminated. If needed, the above treatment may also be applied to the surface of the substrate layer 11.

The amount of the coating agent for forming each of the first and second layers is preferred to be 0.005 g/m$^2$ to 0.200 g/m$^2$, and more preferred to be 0.010 g/m$^2$ to 0.100 g/m$^2$.

If necessary, dry curing may be performed within a base material temperature range of 60°C to 300°C depending on the drying conditions of the anticorrosion treatment layers 14a and 14b used.

(Step of bonding substrate layer 11 and barrier layer 13)

In the present step, the barrier layer 13 provided with the anticorrosion treatment layers 14a and 14b is bonded to the substrate layer 11 via the first adhesive layer 12a. The bonding method uses a technique such as dry lamination, non-solvent lamination, or wet lamination, and bonds both layers together using the materials mentioned above forming the first adhesive layer 12a. The dry coating weight of the first adhesive layer 12a is preferred to be in the range of 1 $g/m^2$ to 10 $g/m^2$, and more preferred to be in the range of 3 $g/m^2$ to 7 $g/m^2$.

(Step of laminating second adhesive layer 12b and sealant layer 16)

In the present step, the sealant layer 16 is bonded to the second anticorrosion treatment layer 14b-side of the barrier layer 13 via the second adhesive layer 12b. The bonding method may be wet processing, dry lamination, or the like.
If wet processing is used, a solution or a dispersion of the adhesive forming the second adhesive layer 12b is applied onto the second anticorrosion treatment layer 14b and the solvent is vaporized at a predetermined temperature (if the adhesive contains an acid-modified polyolefin resin, at a temperature not less than its melting point), followed by drying, which may be further followed by baking, if necessary, to thereby form a film. Then, a sealant layer 16 is laminated, thereby preparing the packaging material 10. The coating method may be any one of the coating methods mentioned above. Preferred dry coating weight of the second adhesive layer 12b is similar to that of the first adhesive layer 12a.
In this case, the sealant layer 16 can be prepared using a sealant layer-forming resin composition containing the above components for forming the sealant layer 16, and using a melt extruder. From the perspective of productivity, the melt extruder may be used at a processing rate of 80 m/min or more.

(Step of aging)

In the present step, the laminate is aged (cured). Aging of the laminate can expedite adhesion between barrier layer 13 / second anticorrosion treatment layer 14b / second adhesive layer 12b / sealant layer 16. Aging may be performed at a temperature in the range of room temperature to 100°C. The aging time may be, for example, 1 day to 10 days.
Through the processing described above, there can be produced a packaging material 10 of the present embodiment as shown in Fig. 1.
Next, an example of a method of producing the packaging material 20 shown in Fig. 2 will be described. Method of producing the packaging material 20 is not limited to the method described below.
The method of producing the packaging material 20 of the present embodiment includes a step of providing the anticorrosion treatment layers 14a and 14b to the barrier layer 13, a step of bonding the substrate layer 11 and the barrier layer 13 using the first adhesive layer 12a, a step of preparing a laminate by further laminating the adhesive resin layer 15 and the sealant layer 16, and, as necessary, a step of heat-treating the obtained laminate. Steps up to the step of bonding the substrate layer 11 and the barrier layer 13 can be performed as in the method of producing the packaging material 10.

(Step of laminating adhesive resin layer 15 and sealant layer 16)

In the present step, the adhesive resin layer 15 and the sealant layer 16 are formed on the second anticorrosion treatment layer 14b that has been formed in the previous steps. The method may include sandwich-laminating the adhesive resin layer 15 together with the sealant layer 16 using an extrusion laminator. Furthermore, the adhesive resin layer 15 and the sealant layer 16 may be extruded and laminated using a tandem lamination method or a co-extrusion method. When forming the adhesive resin layer 15 and the sealant layer 16, components are formulated to satisfy, for example, the structures of the adhesive resin layer 15 and the sealant layer 16 described above. The sealant layer-forming resin composition mentioned above is used for forming the sealant layer 16.
Through the present step, a laminate as shown in Fig. 2 can be obtained in which layers are laminated in the order of substrate layer 11 / first adhesive layer 12a / first anticorrosion treatment layer 14a / barrier layer 13 / second anticorrosion treatment layer 14b / adhesive resin layer 15 / sealant layer 16.
It should be noted that the adhesive resin layer 15 may be laminated by directly extruding materials that have been dry-blended with the above material formulation, using an extrusion laminator. Alternatively, the adhesive resin layer 15 may be laminated by melt-blending materials in advance using a melt kneader, such as a single screw extruder, twin screw extruder or Brabender mixer to produce granules, and extruding the granules using an extrusion laminator.
The sealant layer 16 may be laminated by directly extruding materials that have been dry-blended with the above material formulation as a component of the sealant layer-forming resin composition, using an extrusion laminator. Alternatively, the adhesive resin layer 15 and the sealant layer 16 may be laminated using a tandem lamination method or a coextrusion method in which materials are melt-blended in advance using a melt kneader, such as a single screw extruder, twin screw extruder or Brabender mixer to produce granules, and the granules are extruded to provide the adhesive resin layer 15 and the sealant layer 16. Alternatively, a sealant monolayer film may be formed in advance as a cast film using a sealant layer-forming resin composition, and the film may be laminated by sandwich-lamination together with an adhesive resin. From the perspective of productivity, the formation rate (processing rate) of the adhesive resin layer 15 and the sealant layer 16 may be, for example, 80 m/min or more.

(Step of heat treatment)

In the present step, the laminate is heat-treated. Heat treatment of the laminate can improve adhesion between barrier layer 13 / second anticorrosion treatment layer 14b / adhesive resin layer 15 / sealant layer 16. The method of heat treatment is preferred to be performed at least at a temperature of a melting point of the adhesive resin layer 15 or higher.

Through the processing described above, there can be produced a packaging material 20 of the present embodiment as shown in Fig. 2.

Next, an example of a method of producing a packaging material 25 shown in Fig. 3 will be described. Method of producing the packaging material 25 is not limited to the method described below.

The method of producing the packaging material 25 of the present embodiment includes a step of providing the anticorrosion treatment layers 14a and 14b to the barrier layer 13, a step of bonding the substrate layer 11 and the barrier layer 13 using the first adhesive layer 12a, a step of preparing a laminate by further laminating the sealant layer 16, and, as necessary, a step of heat-treating the obtained laminate. Steps up to the step of bonding the substrate layer 11 and the barrier layer 13 can be performed as in the method of producing the packaging material 10.

(Step of laminating sealant layer 16)

In the present step, the sealant layer 16 is formed on the second anticorrosion treatment layer 14b that has been formed in the previous steps. As a method for this, there may be a method in which the sealant layer 16 is laminated using an extrusion laminator. When forming the sealant layer 16, components are formulated to satisfy, for example, the structure of the sealant layer 16 described above. The sealant layer-forming resin composition mentioned above is used for forming the sealant layer 16.

Through the present step, a laminate as shown in Fig. 3 can be obtained in which layers are laminated in the order of substrate layer 11 / first adhesive layer 12a / first anticorrosion treatment layer 14a / barrier layer 13 / second anticorrosion treatment layer 14b / sealant layer 16.

The sealant layer 16 may be laminated by directly extruding materials that have been dry-blended with the above material formulation as a component of the sealant layer-forming resin composition, using an extrusion laminator. Alternatively, the sealant layer 16 may be laminated by melt-blending materials in advance using a melt kneader, such as a single screw extruder, twin screw extruder or Brabender mixer, to produce granules, and extruding the granules using an extrusion laminator. From the perspective of productivity, the formation rate (processing rate) of the sealant layer 16 may be, for example, 80 m/min or more.

(Step of heat treatment)

In the present step, the laminate is heat-treated. Heat treatment of the laminate can improve adhesion between barrier layer 13 / second anticorrosion treatment layer 14b / sealant layer 16. The method of heat treatment is preferred to be performed at least at a temperature of a melting point of the sealant layer 16 or higher.

Through the processing described above, there can be produced a packaging material 25 of the present embodiment as shown in Fig. 3.

Preferred embodiments of the packaging material for a power storage device of the present disclosure have been described in detail so far. However, the present disclosure is not limited to such specific embodiments, but can be modified and/or changed in various ways within the spirit of the present disclosure recited in the claims.

The packaging material for a power storage device of the present disclosure can be suitably used as packaging materials for power storage devices including, for example, secondary batteries such as lithium ion batteries, nickel hydrogen batteries and lead storage batteries, and electrochemical capacitors such as electric double layer capacitors. The packaging material for a power storage device of the present disclosure can maintain good heat sealability even when it is used under high temperature conditions after being heat-sealed. Therefore, of the batteries and capacitors mentioned above, the packaging material of the present disclosure is suitable for packaging materials for fully solid-state batteries using solid electrolyte, which are expected to be used under such conditions.

[Power storage device]

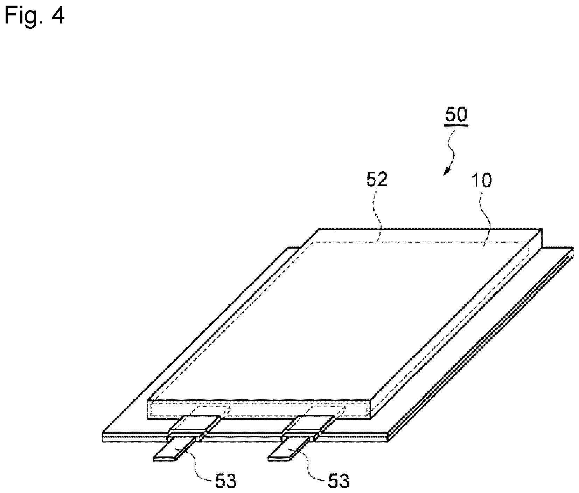

Fig. 4 is a perspective view illustrating an embodiment of a power storage device produced using the packaging material described above. As shown in Fig. 4, a power storage device 50 includes a battery element (power storage device body) 52 including electrodes, two metal terminals (leads or current output terminals) 53 extending from the respective electrodes to externally output current from the battery element 52, and a packaging material 10 hermetically containing the battery element 52. The packaging material 10 is the packaging material related to the present embodiment described above and is used as a container for accommodating the battery element 52 therein. In the packaging material 10, the substrate layer 11 is the outermost layer and the sealant layer 16 is the innermost layer. Specifically, the packaging material 10 has a structure in which the battery element 52 is contained by folding one laminate film into two with the substrate layer 11 being outermost in the power storage device 50 and the sealant layer 16 being innermost therein and heat-sealing the periphery of the folded film, or by overlapping two laminate films and heat-sealing the periphery of the overlapped films. The metal terminals 53 are sandwiched and held by the packaging material 10 forming a container with the sealant layer 16 being inside, and hermetically sealed. The metal terminals 53 may be sandwiched and held by the packaging material 10 via a tab sealant. In the power storage device 50, the packaging material 20 or the packaging material 25 may be used instead of the packaging material 10.

The battery element 52 has a structure in which an electrolyte is interposed between a positive electrode and a negative electrode. The metal terminals 53 are part of a current collector externally drawn out of the packaging material 10, and are formed of metal foils such as copper foils or aluminum foils.

The power storage device 50 of the present embodiment may be a fully solid-state battery. In this case, a solid electrolyte, such as a sulfide-based solid electrolyte, is used as an electrolyte for the battery element 52. Since the power storage device 50 of the present embodiment uses the packaging material 10 of the present embodiment, high heat seal strength can be secured even when the power storage device is used under high temperature conditions. Furthermore, since the power storage device 50 of the present embodiment uses the packaging material 10 of the present embodiment, high heat seal strength can be secured under high temperature conditions (e.g., 150°C), and high heat seal strength can also be secured under room temperature conditions after exposure to high temperature conditions.

(Third aspect)

<Power storage device>

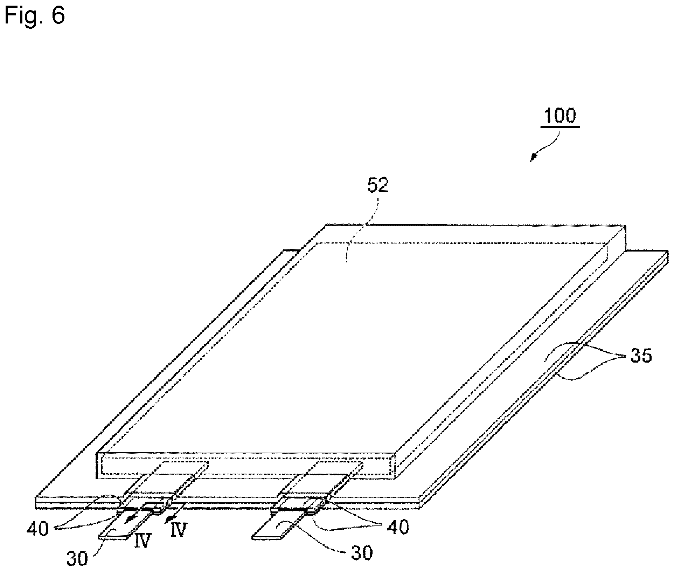

Fig. 6 is a schematic perspective view illustrating a configuration of a power storage device according to the present embodiment. Fig. 6 shows a power storage device 100 as an example of a fully solid-state battery, referring to which the following description will be provided. It should be noted that power storage devices having the configuration shown in Fig. 6 may be referred to as battery packs or battery cells.

The power storage device 100 as a fully solid-state battery includes a power storage device body 52, a packaging material 35, two metal terminals 30, and terminal coating resin films 40 (tab sealant). The power storage device body 52 is a battery body that charges or discharges current. The packaging material 35 is arranged covering surfaces of the power storage device body 52 and in contact with part of the terminal coating resin films 40.

[Packaging material]

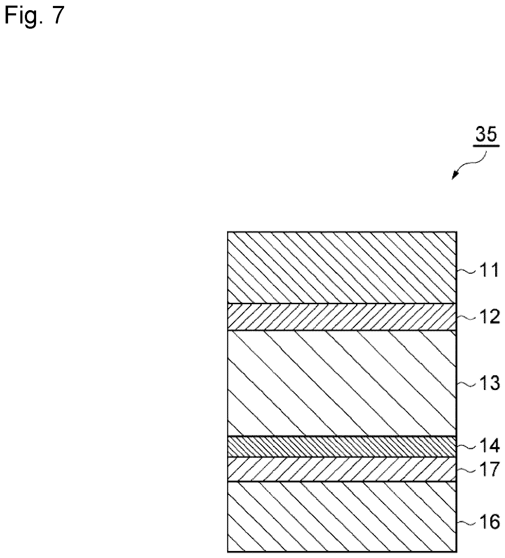

Fig. 7 is a cross-sectional view illustrating an example of a cross section of the packaging material 35. The packaging material 35 has a multilayer structure in which a substrate layer 11, a first adhesive layer 12, a barrier layer 13, an anticorrosion treatment layer 14, a second adhesive layer 17, and a sealant layer 16 are provided in this order from the outer side toward the inner side (power storage device body 52 side).

(Sealant layer)

The sealant layer 16 has at least one secondary dispersion peak $\gamma$ in the range of -130°C to -50°C in a loss tangent tan $\delta$ profile which is obtained through dynamic viscoelastic measurement under a condition of 1.0 Hz. With the sealant layer 16 satisfying this condition, the packaging material 35 can achieve sufficiently high seal strength at high temperatures balanced with sufficiently high initial seal strength (seal strength at room temperature). From the perspective of seal strength at room temperature and high temperatures, the temperature range where the secondary dispersion peak $\gamma$ appears is preferred to be -120°C to -60°C, and more preferred to be -110°C to -70°C. If the secondary dispersion peak $\gamma$ appears at a temperature lower than -130°C, heat resistance of the sealant layer 16 may become poor and seal strength thereof may become insufficient at high temperatures. If the secondary dispersion peak $\gamma$ appears at a temperature higher than -50°C, flexibility of the sealant layer 16 may become poor and seal strength thereof may become insufficient at room temperature.

To calculate the loss tan $\delta$, for example, the packaging material may be immersed in a sodium hydroxide aqueous solution to dissolve the barrier layer (metal foil) and obtain a film formed of only the sealant layer, and the sealant layer film may be measured under the following conditions according to JIS K 7244-4 and using a dynamic viscoelastic measurer (product name: DMS6100 manufactured by Seiko Instruments Inc.) to obtain a loss elastic modulus E" and a storage elastic modulus E' used for calculating a loss tan δ.

> Peeling mode: tensile
> Temperature rise rate: 2°C/min
> Temperature range: -150°C to 150°C
> Frequency: 1.0 Hz

The sealant layer 16 is preferred to have at least one primary dispersion peak α in the range of 30°C to 130°C in the tan δ profile. With the sealant layer 16 satisfying this condition, the packaging material 35 can exhibit much higher initial seal strength (seal strength at room temperature). From the perspective of seal strength at room temperature, the temperature range where the primary dispersion peak α appears is preferred to be 40°C to 110°C, and more preferred to be 50°C to 100°C. If the primary dispersion peak α appears at a temperature lower than 30°C, heat resistance of the sealant layer 16 may become poor and seal strength thereof may become insufficient at high temperatures. If the primary dispersion peak α appears at a temperature higher than 130°C, flexibility of the sealant layer 16 may become poor and seal strength thereof may tend to become insufficient at room temperature.

The temperature at which the secondary dispersion peak γ or the primary dispersion peak α appears can be controlled, for example, by controlling the structure of the base resin material contained in the sealant layer 16, the draw ratio of the sealant layer 16, or the amount of additives (e.g., plasticizer). As necessary, the sealant layer 16 may contain additives. Examples of the additives may include, a plasticizer, antioxidant, slip agent, flame retardant, AB agent, light stabilizer, dehydrating agent, and tackifier.

The base resin material contained in the sealant layer 16 may be, for example, a polyester resin, polyolefin resin, or polyamide resin.

The polyester resin can be obtained by copolymerizing an acid component with a glycol component. Examples of the acid component may include phthalic acid, terephthalic acid, isophthalic acid, naphthalenedicarboxylic acid, cyclohexanedicarboxylic acid, adipic acid, and sebacic acid. Examples of the glycol component may include ethylene glycol, butanediol, pentanediol, hexanediol, neopentyl glycol, diethylene glycol, polytetramethylene glycol, cyclohexanedimethanol, and propanediol. According to the analysis performed by the present inventors, generally used PET (copolymer of terephthalic acid and ethylene glycol) has a secondary dispersion peak γ appearing outside the temperature range of -130°C to -50°C and thus has insufficient seal strength at room temperature. If no plasticizer is added to the sealant layer 16, the sealant layer 16 is preferred to contain a polyester resin in which two or more glycol components are copolymerized with one acid component.

The polyolefin resin may be a polyethylene or polypropylene resin. Generally used polyolefin resins have poor heat resistance and therefore, it is preferred to use a resin in which polyethylene, polypropylene, or the like is modified with an amide or the like. If the sealant layer 16 and the barrier layer 13 are bonded together by thermal lamination, it is preferred to use a polyolefin modified by an acid such as carboxylic acid or maleic anhydride, or an amide-modified polyolefin.

The polyamide resin may be, for example, nylon-6 or nylon-6,6.

From the perspective of controlling the temperature at which the secondary dispersion peak γ or the primary dispersion peak α of the sealant layer 16 appears, the sealant layer 16 is preferred to contain a plasticizer. The plasticizer may be, for example, an ester compound. Specific examples may include glycol diester, adipate ester, phthalate ester, a diacetyl monoacyl glycerol derivative, and an ester having an ether skeleton. The content of the plasticizer in the sealant layer 16 is preferred to be 30 mass% or less relative to the mass of the sealant layer 16, although the content may depend on the base resin material of the sealant layer 16. If a plasticizer is excessively added to the sealant layer 16, the temperature at which the secondary dispersion peak γ or the primary dispersion peak α appears may be excessively lowered and cohesive force may be reduced.

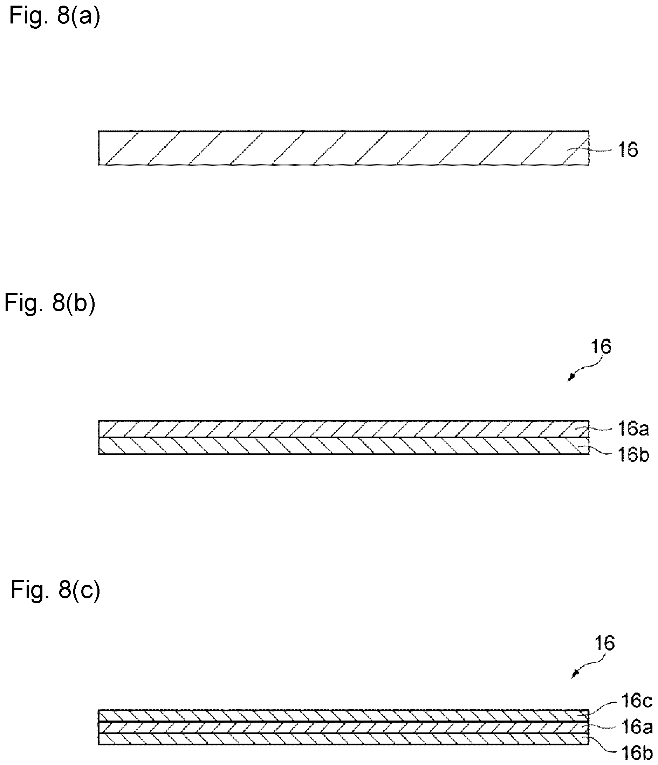

The sealant layer 16 may have a monolayer structure or a multilayer structure having two or more layers (see Figs. 8(a) to 8(c)). If the sealant layer has a monolayer structure, the thickness thereof is preferred to be 10 μm to 300 μm, and more preferred to be 20 μm to 100 μm. If the sealant layer 16 has a thickness of 10 μm or more, sealing properties and insulation properties may be easily secured, and if it has a thickness of 300 μm or less, the cell volume can be secured.

Fig. 8(b) is a schematic cross-sectional view illustrating a sealant layer 16 having a two-layer structure. The sealant layer 16 shown in the figure includes a first resin layer 16a and a second resin layer 16b formed on the inner surface of the first resin layer 16a. For example, the first resin layer 16a may be formed of a material different from that of the second resin layer 16b, or may have a thickness different from that of the second resin layer 16b. The first and second resin layers 16a and 16b may each have a thickness of, for example, 5 μm to 300 μm, and more preferably 20 μm to 200 μm. As shown in Fig. 8(c), the sealant layer 16 may have a three-layer structure further including a third resin layer 16c.

If the electrolyte of the fully solid-state battery is a sulfide-based electrolyte, the sealant layer 16 is preferred to contain a hydrogen sulfide adsorbent. If the sealant layer 16 contains a hydrogen sulfide adsorbent, high seal strength can be maintained at room temperature and high temperatures even after exposure to hydrogen sulfide. As the hydrogen sulfide adsorbent, a material having performance of absorbing or adsorbing hydrogen sulfide may be used. The specific examples may include zinc oxide, amorphous metal silicates, hydroxides of zirconium and/or lanthanoid elements, tetravalent metal phosphates, potassium permanganate, sodium permanganate, aluminum oxide, iron hydroxide, silver sulfate, silver acetate, isocyanate compounds, aluminum silicate, aluminum potassium sulfate, zeolites, activated carbon, amine compounds, and ionomers.

The content of the hydrogen sulfide adsorbent in the sealant layer 16 is preferred to be 1 mass% to 50 mass%, more preferred to be 2 mass% to 25 mass%, and even more preferred to be 5 mass% to 15 mass%, relative to the mass of the sealant layer 16. If the content of the hydrogen sulfide adsorbent in the sealant layer 16 is 1 mass% or more, the effect of adsorbing hydrogen sulfide is exhibited, and if it is 50 mass% or less, adhesion of the sealant layer 16 can be balanced with sealant suitability. If the sealant layer 16 has a multilayer structure, all or part of the layers may need to contain the hydrogen sulfide adsorbent. It should be noted that layers other than the sealant layer 16 (e.g., second adhesive layer 17) in the packaging material 35 may contain a sulfide-based electrolyte; however, from the perspective of the content of the hydrogen sulfide adsorbent, at least the sealant layer 16 is preferred to contain the hydrogen sulfide adsorbent.

(Substrate layer)

As the substrate layer 11, a layer similar to the substrate layer 11 of the packaging material 10 according to the first or second aspect can be used.

(First adhesive layer)

As the first adhesive layer 12, a layer similar to the first adhesive layer 12a of the packaging material 10 according to the first or second aspect can be used.

(Barrier layer)

As the barrier layer 13, a layer similar to the barrier layer 13 of the packaging material 10 according to the first or second aspect can be used.

(Anticorrosion treatment layer)

As the anticorrosion treatment layer 14, a layer similar to the anticorrosion treatment layer 14a or 14b of the packaging material 10 according to the first or second aspect can be used.

(Second adhesive layer)

As the second adhesive layer 17, a layer similar to the second adhesive layer 12b of the packaging material 10 according to the first or second aspect can be used.

(Metal terminals)

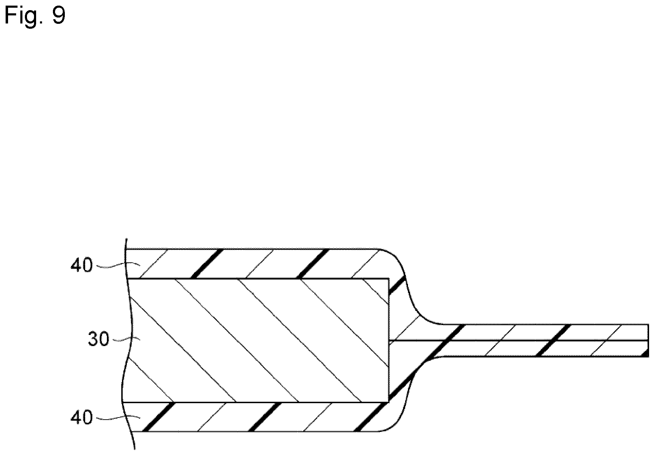

Fig. 9 is a cross-sectional view taken along the line IV-IV of a terminal coating resin film and the corresponding metal terminal shown in Fig. 6. Of the two metal terminals 30, 30, one is electrically connected to the positive electrode of the power storage device body 52 and the other is electrically connected to the negative electrode thereof. The two metal terminals 30, 30 extend to the outside of the packaging material 35 from the power storage device body 52. The two terminals 30, 30 may each have a plate-like shape, for example.

As the material for the metal terminals 30, metal can be used. The metal used as a material for the metal terminals 30 may be determined considering the structure, materials of the component, and the like of the power storage device body 52. For example, if the power storage device 100 is a fully solid-state battery, aluminum is preferred to be used as a material for the metal terminal 30 connected to the positive electrode of the power storage device body 52. As a material for the metal terminal 30 connected to the negative electrode of the power storage device body 52, copper having a nickel-plated layer on the surface thereof, or nickel is preferred to be used.

The metal terminals 30 each have a thickness depending on the size or capacity of the fully solid-state battery. If the fully solid-state battery has a small size, the thickness of each metal terminal 30 may be 50 $\mu$m or more, for example. If the fully solid-state battery has a large size suitable for electrical storage and/or vehicle installation, the thickness of each metal terminal 30 can be appropriately determined within the range of 100 $\mu$m to 500 $\mu$m, for example.

[Terminal coating resin film]

As shown in Fig. 9, each terminal coating resin film 40 is arranged covering part of the outer periphery of the corresponding metal terminal 30. Arrangement of a terminal coating resin film 40 between the corresponding metal terminal 30 and the packaging material 35 can achieve even higher sealing properties and insulation properties for the power storage device 100. The terminal coating resin films 40 have heat resistance equivalent to or exceeding that of the sealant layer 16 and the substrate layer 11 described above. It should be noted that if use of the sealant layer 16 in the packaging material 35 can sufficiently secure sealing properties and insulation properties for the power storage device 100, the terminal coating resin films 40 do not have to be necessarily used.

Some embodiments of the present disclosure have so far been specifically described. However, the present invention should not be construed as being limited to these embodiments but may be variously modified and/or changed within the range of the spirit of the present disclosure recited in the claims. For example, the above embodiments exemplified a mode in which the anticorrosion treatment layer 14 is provided to only one surface of the barrier layer 13 (the second adhesive layer 17 side surface); however, the anticorrosion treatment layer 14 may also be provided to the other surface of the barrier layer 13 (the first adhesive layer 12 side surface). Furthermore, for example, if the sealant layer 16 is bonded to the barrier layer 13 through thermal lamination, the second adhesive layer 17 may be omitted. If the substrate layer 11 is provided using coating, the first adhesive layer 12 does not have to be provided. In the embodiments described above, a fully solid-state battery has been exemplified as a power storage device to which the packaging material 35 is applied. However, the packaging material 35 may be applied to other power storage devices (e.g., lithium ion batteries).

A sealant film selection method may be performed based on the contents of the above embodiments. Specifically, this selection method is for selecting a sealant film used as a sealant layer in a packaging material for a power storage device, and may need to include (A) a step of performing dynamic viscoelastic measurement under a condition of 1.0 Hz for a sealant film to be evaluated, and (B) a step of determining whether at least one secondary dispersion peak $\gamma$ appears in the range of -130°C to -50°C in a tan $\delta$ profile obtained through the dynamic viscoelastic measurement. Matters described in the above embodiments may be appropriately applied to this selection method.

Examples

In the following, the present disclosure will be more specifically described based on examples; however, the present disclosure should not be limited to the following examples.

[Materials used]

Materials used in Examples 1-1 to 1-13, Examples 2-1 to 2-42, and Comparative Examples 1-1 to 1-5 and 2-1 to 2-6 are shown below.

<Substrate layer (25 $\mu$m thickness)>

A polyethylene terephthalate film with one surface corona-treated was used.

<First adhesive layer (4 $\mu$m thickness)>

A polyurethane adhesive (manufactured by Toyo Ink Co., Ltd.) was used, containing a polyester polyol-based base resin to which a tolylene diisocyanate adduct curing agent was added.

<First anticorrosion treatment layer (substrate layer side) and second anticorrosion treatment layer (sealant layer side)>

(CL-1): A sodium polyphosphate-stabilized cerium oxide sol was used, with the solid content concentration adjusted to 10 mass% using distilled water as a solvent. It should be noted that the sodium polyphosphate-stabilized cerium oxide sol was obtained by mixing 10 parts by mass of Na salt of phosphoric acid into 100 parts by mass of cerium oxide.

(CL-2): A composition was used, which contained 90 mass% of polyallylamine (manufactured by Nitto Boseki Co., Ltd) with the solid content concentration adjusted to 5 mass% using distilled water as a solvent, and 10 mass% of polyglycerol polyglycidyl ether (manufactured by Nagase Chemtex Corp.).

(CL-3): A chemical conversion treatment agent was used, which was prepared by adding chromium fluoride

(CrF$_3$) to a water-soluble phenol resin (manufactured by Sumitomo Bakelite Co., Ltd.) having a solid content concentration adjusted to 1 mass%, and adjusting the concentration of the CrF$_3$ using a phosphoric acid aqueous solution having a 1 mass% concentration as a solvent, so that the Cr content in the final dry coating film would be 10 mg/m$^2$.

<Barrier layer (40 $\mu$m thickness)>

An annealed and degreased soft aluminum foil (8079 Material manufactured by Toyo Aluminum K.K.) was used.

<Second adhesive layer (3 $\mu$m thickness)>

An epoxy-based adhesive was used, which was obtained by mixing 100 parts by mass of an epoxy resin (product name: EP4100 manufactured by ADEKA Corporation) into 25 parts by mass of a polyamide amine-based curing agent (product name: EH4602 manufactured by ADEKA Corporation), and diluting the mixture with ethyl acetate so that the solid content would be 30 mass%.

(Sealant layer related to first aspect)

The following materials were prepared as components forming a sealant layer-forming resin composition.

(Component (B))

B-1: Propylene-ethylene random copolymer (glass transition temperature: -5°C, melting point: 135°C)
B-2: Branched low density polyethylene resin (glass transition temperature: -125°C, melting point: 105°C)

(Component (A))

A-1: Apolhya LP2 (product name) (manufactured by Arkema, Inc., melting point: 216°C)
A-2: APL6013T (product name) (manufactured by Mitsui Chemicals, Inc., glass transition temperature: 125°C)
A-3: APL6509T (product name) (manufactured by Mitsui Chemicals, Inc., glass transition temperature: 80°C)

(Component (A'))

A'-1: Apolhya LC3 (product name) (manufactured by Arkema, Inc., glass transition temperature: none)
A'-2: Vylon RN-9300 (product name) (manufactured by Toyobo Co., Ltd., melting point: 198°C, glass transition temperature: 73°C, crystalline polyester resin containing no polyolefin units)

(Component (C))

C-1: INTUNE (product name) (manufactured by Dow Inc.)
C-2: DYNARON (product name) (manufactured by JSR Corporation)
C-3: BIOLLOY NM110NP (product name) (manufactured by JSR Corporation, polyester/polyolefin compatibilizer)

(Hydrogen sulfide adsorbent)

Zinc oxide (manufactured by Sakai Chemical Industry Co., Ltd.)

<Sealant layer related to second aspect (80 $\mu$m thickness>

The first resin and the second resin shown in Table 1 were used. The first and second resins were melt blended in advance using a twin screw kneader for use as a sealant layer-forming resin composition. Components of the sealant layer-forming resin composition (resins used and amounts thereof) are shown in Tables 3 to 7. The unit % for amounts in the tables refers to a mass-based unit mass% relative to the total amount (100 mass%) of the first and second resins. The modified polyolefins are those which are modified by the acid anhydrides indicated in the column of name, or those which have polar groups indicated in the same column.

[Table 1]

| | Type | Description name | Product name | Manufacturer |
|---|---|---|---|---|
| First resin | Polyolefin | Block PP | Novatec PP | Japan Polypropylene Corporation |
| | Modified polyolefin | Maleic anhydride | Toyotac (PP) | Toyobo Co., Ltd. |
| | | Hydroxy group | Melthene | Tosoh Corporation |
| | | Carboxy group | NUCREL | Mitsui Du Pont Polychemical Co., Ltd. |
| | | Ester group | EVATANE | Arkema, Inc. |
| Second resin | Polyester | Polyester A | Acid component: Terephthalic acid Glycol component: Ethylene glycol, butanediol, 1,4-cyclohexanedimethanol | |
| | | Polyester B | Acid component: Naphthalenedicarboxylic acid Glycol component: Ethylene glycol | |
| | | Polyester C | Acid component: Terephthalic acid Glycol component: Ethylene glycol | |
| | | Polyester D | Acid component: Terephthalic acid Glycol component: Ethylene glycol (having higher glycol component ratio than in polyester C) | |
| | | Polyester E | Acid component: Naphthalenedicarboxylic acid Glycol component: Ethylene glycol (having higher glycol component ratio than in polyester B) | |
| | Polyamide | Ny6 | GLAMIDE | Toyobo Co., Ltd. |
| | Polycarbonate | PC | Iupilon | Mitsubishi Chemical Corporation |
| | Polyphenylene ether | PPE | *XYRON* | Asahi Kasei Corporation |

<Hydrogen sulfide adsorbent>

In part of Examples 2-1 to 2-42 and Comparative Examples 2-1 to 2-6, zinc oxide (manufactured by Sakai Chemical Industry Co., Ltd.) as a hydrogen sulfide adsorbent was added to the sealant layer or the second adhesive layer. Whether the hydrogen sulfide adsorbent was added is shown in Tables 3 to 7. If the hydrogen sulfide adsorbent was added to the sealant layer, the addition amount was 3 parts by mass relative to 100 parts by mass of the total amount of the first and second resins. If the sealant layer was a multilayer, the hydrogen sulfide adsorbent was added to both of the layers with the above addition amount. If the hydrogen sulfide adsorbent was added to the second adhesive layer, the addition amount was 3 parts by mass relative to 100 parts by mass of the total amount of the epoxy resin and the curing agent. The hydrogen sulfide adsorbent was used being mixed into the material forming each layer.

[Production of packaging material]

(Example 1-1)

First, first and second anticorrosion treatment layers were provided to the barrier layer through the following procedure. Specifically, (CL-1) was applied to both surfaces of the barrier layer by micro gravure coating at a dry coating weight of 70 mg/m$^2$, followed by baking at 200°C in a drying unit. Next, (CL-2) was applied onto the obtained layer by micro gravure coating at a dry coating weight of 20 mg/m$^2$, thereby forming composite layers of (CL-1) and (CL-2) as first and second anticorrosion treatment layers. The composite layers were ensured to exhibit corrosion prevention performance by combining the two materials (CL-1) and (CL-2).

Next, the first anticorrosion treatment layer side surface of the barrier layer provided with the first and second anticorrosion treatment layers was dry-laminated to the substrate layer using the polyurethane-based adhesive (first adhesive layer). Next, the second anticorrosion treatment layer side surface of the barrier layer provided with the first and second anticorrosion treatment layers was dry-laminated to the sealant layer (80 µm thickness) formed in advance as a cast film, using the epoxy-based adhesive (second adhesive layer) to produce a packaging material (laminate of substrate layer / first adhesive layer / first anticorrosion treatment layer / barrier layer / second anticorrosion treatment layer / second adhesive layer / sealant layer). For forming the sealant layer, a sealant layer-forming resin composition containing the components shown in Table 2 was used. The barrier layer and the sealant layer were laminated with each other by applying the epoxy-based adhesive onto the second anticorrosion treatment layer side surface of the barrier layer at a dry coating weight (mass per unit area) of 3 g/m$^2$ (3 µm thickness), followed by drying for 1 minute at 80°C, laminating with the sealant layer, and aging for 3 hours at 120°C. The numerical values in the column of sealant layer in Table 2 indicate contents (unit: mass part(s)) of the components in the sealant layer-forming resin composition. The content of each component in the sealant layer as formed is equal to the content of the component in the sealant layer-forming resin composition.

(Examples 1-2 to 1-8 and 1-11 to 1-13)

Packaging materials of Examples 1-2 to 1-8 and 1-11 to 1-13 (laminate of substrate layer / first adhesive layer / first anticorrosion treatment layer / barrier layer / second anticorrosion treatment layer / second adhesive layer / sealant layer) were produced as in Example 1-1 except that the components of the sealant layer-forming resin composition were changed as shown in Table 2.

(Example 1-9)

A packaging material of Example 1-9 (laminate of substrate layer / first adhesive layer / barrier layer / second adhesive layer / sealant layer) was produced as in Example 1-5 except that neither of the first and second anticorrosion treatment layers was provided to the barrier layer.

(Example 1-10)

Packaging material of Example 1-10 (laminate of substrate layer / first adhesive layer / barrier layer / second adhesive layer / sealant layer) was produced as in Example 1-9 except that the hydrogen sulfide adsorbent was added to the sealant layer-forming resin composition as shown in Table 2.

[Comparative Examples 1-1 to 1-5]

Packaging materials of Comparative Examples 1-1 to 1-5 (laminate of substrate layer / first adhesive layer / first anticorrosion treatment layer / barrier layer / second anticorrosion treatment layer / second adhesive layer / sealant layer) were produced as in Example 1-1 except that the components of the sealant layer-forming resin composition were changed as shown in Table 2.

(Measurement of heat seal strength)

Each packaging material was cut to a size of 120 mm × 60 mm and folded into halves so that the sealant layer was inside, and the ends opposite to the fold were heat-sealed at a width of 10 mm for 3 seconds at 0.5 MPa and temperatures shown in Table 2. In conformity with the components of the sealant layer, heat-sealing temperatures of Comparative Examples 1-1 to 1-3 were made lower than in other examples. This is because if the packaging materials of Comparative Examples 1-1 to 1-3 are heat-sealed at 220°C, the sealant layer may be excessively fluidized and the thickness of the sealant layer in the sealing portion may become excessively thin, resultantly deteriorating insulation properties and the like.

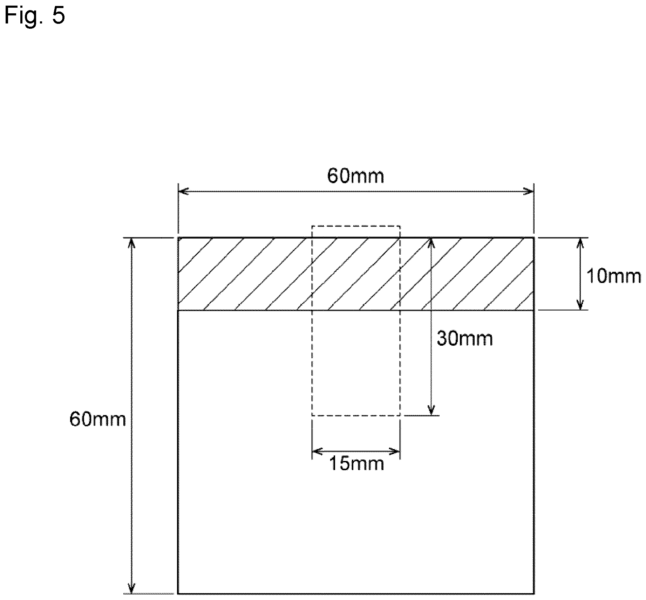

Next, the heat-sealed packaging materials were left to stand at room temperature for 6 hours and then the center portion of each heat-sealed portion in the length direction was cut to a size of 15 mm width × 30 mm length (see Fig. 5) to prepare a heat seal strength measurement sample. Such samples were separately left to stand under room temperature (25°C) conditions and under 150°C test conditions for 5 minutes and then heat-sealed portions of the samples were subjected to T peeling test at a tension rate of 50 mm/min under these temperature conditions using a tension testing device (manufactured by Shimadzu Corporation). Thus, heat seal strengths under room temperature conditions and high temperature conditions were measured. The obtained heat seal strengths of the samples were used for evaluation according to the following criteria. If the evaluation is A or B, it means that the packaging material passed the test, and if C, failed. The results are shown in Table 2.

A: Heat seal strengths at room temperature and 150°C were both 35 N/15 mm or more.
B: Heat seal strength at room temperature was 35 N/15 mm or more, or heat seal strength at 150°C was 20 N/15 mm or more.
C: At least one of heat seal strengths at room temperature and 150°C was less than 20 N/15 mm.

[Measurement of $H_2S$ adsorptivity]

Each sealant layer sample with an area of 10 cm$^2$ and a thickness of 80 $\mu$m formed using the sealant layer-forming resin composition shown in Table 2 was placed in a 2L-capacity Tedlar (trademark) bag and sealed. 5 volume ppm of 2L hydrogen sulfide gas was injected into this bag and left to stand at room temperature (25°C) for 24 hours, and then hydrogen sulfide concentration was measured using a gas detector tube. The lower the hydrogen sulfide concentration is, the sealant layer has the better $H_2S$ adsorptivity. The results are shown in Table 2.

[Table 2]

| | Sealant layer | | | | | Anticorrosion treatment layer | Heat sealing temp. (°C) | Evaluation | | | |
|---|---|---|---|---|---|---|---|---|---|---|---|
| | Component (B) (mass part) | Component (A) (mass part) | Component (A') (mass part) | Component (C) (mass part) | Hydrogen sulfide adsorptive material | | | Heat seal strength (N/15 mm) | | | $H_2S$ adsorptivity (mass ppm) |
| | | | | | | | | Room temp. cond. | 150°C cond. | Judgement | |
| E 1-1 | B-1 (100) | A-1 (10) | - | - | - | CL1+CL2 | 220 | 54 | 32 | B | 4 |
| E 1-2 | B-1 (100) | A-1 (50) | - | - | - | CL1+CL2 | 220 | 48 | 35 | A | 4 |
| E 1-3 | B-1 (100) | A-1 (100) | - | - | - | CL1+CL2 | 220 | 32 | 28 | B | 4 |
| E 1-4 | B-1 (100) | A-1 (150) | - | - | - | CL1+CL2 | 220 | 25 | 20 | B | 4 |
| E 1-5 | B-1 (100) | A-1 (50) | - | C-1 (15) | - | CL1+CL2 | 220 | 72 | 41 | A | 4 |
| E 1-6 | B-1 (100) | A-1 (50) | - | C-2 (10) | - | CL1+CL2 | 220 | 70 | 42 | A | 4 |
| E 1-7 | B-1 (100) | A-2 (50) | - | - | - | CL1+CL2 | 220 | 39 | 28 | B | 4 |
| E 1-8 | B-1 (100) | A-2 (50) | - | C-1 (20) | - | CL1+CL2 | 220 | 56 | 38 | A | 4 |
| E 1-9 | B-1 (100) | A-1 (50) | - | C-1 (15) | - | - | 220 | 69 | 26 | B | 4 |
| E 1-10 | B-1 (100) | A-1 (50) | - | C-1 (15) | Zinc oxide 1 | - | 220 | 58 | 33 | B | <1 |
| E 1-11 | B-2 (100) | A-1 (50) | - | - | - | CL1+CL2 | 220 | 55 | 22 | B | 4 |
| E 1-12 | B-2 (100) | A-1 (50) | - | C-1 (15) | - | CL1+CL2 | 220 | 58 | 21 | B | 4 |
| E 1-13 | B-1 (100) | A-3 (50) | - | C-1 (20) | - | CL1+CL2 | 220 | 63 | 27 | A | 4 |
| CE 1-1 | B-1 (100) | - | - | - | - | CL1+CL2 | 190 | 68 | 5 | C | 4 |
| CE 1-2 | B-2 (100) | - | - | - | - | CL1+CL2 | 170 | 40 | 1 | C | 4 |
| CE 1-3 | B-1 (100) | - | A'-1 (50) | C-1 (15) | - | CL1+CL2 | 190 | 48 | 6 | C | 4 |

(continued)

| | Sealant layer | | | | | Anticorrosion treatment layer | Heat sealing temp. (°C) | Evaluation | | | | |
|---|---|---|---|---|---|---|---|---|---|---|---|---|
| | Component (B) (mass part) | Component (A) (mass part) | Component (A') (mass part) | Component (C) (mass part) | Hydrogen sulfide adsorptive material | | | Heat seal strength (N/15 mm) | | | | $H_2S$ adsorptivity (mass ppm) |
| | | | | | | | | Room temp. cond. | 150°C cond. | Judgement | | |
| CE 1-4 | - | A-1 (100) | - | - | - | CL1+CL2 | 220 | 15 | 12 | C | | 4 |
| CE 1-5 | B-1 (100) | - | A'-2 (50) | C-3 (10) | - | CL1+CL2 | 220 | 28 | 7 | C | | 4 |

E = Example
CE = Comparative Example

[Production of packaging material]

(Examples 2-1 to 2-3)

The barrier layer was dry-laminated to the substrate layer using the polyurethane-based adhesive (first adhesive layer) The lamination between the barrier layer and the substrate layer was performed by applying the polyurethane-based adhesive onto one surface of the barrier layer so that the cured thickness would be 4 $\mu$m, drying the coating for 1 minute at 80°C, laminating the substrate layer thereto, and aging the laminate for 5 days at 60°C.

Next, the surface of the barrier layer facing away from the surface provided with the substrate layer was dry-laminated to the sealant layer using the epoxy-based adhesive (second adhesive layer). The lamination between the barrier layer and the sealant layer was performed by applying the epoxy-based adhesive onto the surface of the barrier layer facing away from the surface provided with the substrate layer so that the cured thickness would be 3 $\mu$m, drying the coating for 1 minute at 80°C, laminating the sealant layer thereto, and aging the laminate for 3 hours at 120°C. The sealant layer used was a cast film prepared in advance using the sealant layer-forming resin composition shown in Table 3. Through the method described above, a packaging material (laminate of substrate layer / first adhesive layer / barrier layer / second adhesive layer / sealant layer) was produced.

(Examples 2-4 to 2-14)

First, first and second anticorrosion treatment layers were provided to the barrier layer through the following procedure. Specifically, (CL-1) was applied to both surfaces of the barrier layer by micro gravure coating at a dry coating weight of 70 mg/m$^2$, followed by baking at 200°C in a drying unit. Next, (CL-2) was applied onto the obtained layer by micro gravure coating at a dry coating weight of 20 mg/m$^2$, thereby forming composite layers of (CL-1) and (CL-2) as first and second anticorrosion treatment layers. The composite layers were ensured to exhibit corrosion prevention performance by combining the two materials (CL-1) and (CL-2).

Next, the first anticorrosion treatment layer side surface of the barrier layer provided with the first and second anticorrosion treatment layers was dry-laminated to the substrate layer using the polyurethane-based adhesive (first adhesive layer). The lamination between the barrier layer and the substrate layer was performed by applying the polyurethane-based adhesive onto the first anticorrosion treatment layer side surface of the barrier layer so that the cured thickness would be 4 $\mu$m, followed by drying the coating for 1 minute at 80°C, laminating the substrate layer thereto, and aging the laminate for 5 days at 60°C.

Next, the second anticorrosion treatment layer side surface of the barrier layer provided with the first and second anticorrosion treatment layers was dry-laminated to the sealant layer using the epoxy-based adhesive (second adhesive layer). The lamination between the barrier layer and the sealant layer was performed by applying the epoxy-based adhesive onto the surface of the barrier layer facing away from the surface provided with the substrate layer so that the cured thickness would be 3 $\mu$m, drying the coating for 1 minute at 80°C, laminating the sealant layer thereto, and aging the laminate for 3 hours at 120°C. The sealant layer used was a cast film prepared in advance using the sealant layer-forming resin composition shown in Table 3. Through the method described above, a packaging material (laminate of substrate layer / first adhesive layer / first anticorrosion treatment layer / barrier layer / second anticorrosion treatment layer / second adhesive layer / sealant layer) was produced. It should be noted that the hydrogen sulfide adsorbent was added to the second adhesive layer in Example 2-12, and added to the sealant layer in other examples.

(Example 2-15)

A packaging material (laminate of substrate layer / first adhesive layer / barrier layer / second adhesive layer / sealant layer) was produced as in Example 2-11 except that no anticorrosion treatment layers were provided.

(Example 2-16)

A packaging material (laminate of substrate layer / first adhesive layer / first anticorrosion treatment layer / barrier layer / second anticorrosion treatment layer / second adhesive layer / sealant layer) was produced as in Example 2-11 except that the hydrogen sulfide adsorbent was not added to the sealant layer.

(Examples 2-17 to 2-23)

A packaging material (laminate of substrate layer / first adhesive layer / first anticorrosion treatment layer / barrier layer / second anticorrosion treatment layer / second adhesive layer / sealant layer) was produced as in Example 2-11 except that the components of the sealant layer-forming resin composition were changed as shown in Table 4.

(Example 2-24)

First and second anticorrosion treatment layers were provided through the following procedure. Specifically, (CL-3) was applied to both surfaces of the barrier layer by micro gravure coating at a dry coating weight of 30 mg/m², followed by baking at 200°C in a drying unit. Next, (CL-2) was applied onto the obtained layer by micro gravure coating at a dry coating weight of 20 mg/m², thereby forming composite layers of (CL-3) and (CL-2) as first and second anticorrosion treatment layers. The composite layers were ensured to exhibit corrosion prevention performance by compounding two materials (CL-3) and (CL-2). A packaging material (laminate of substrate layer / first adhesive layer / first anticorrosion treatment layer / barrier layer / second anticorrosion treatment layer / second adhesive layer / sealant layer) was produced as in Example 2-11 except that a barrier layer thus provided with the first and second anticorrosion treatment layers was used.

(Examples 2-25 to 2-27)

As in Example 2-11, a barrier layer provided with first and second anticorrosion treatment layers was laminated to the substrate layer using the polyurethane-based adhesive (first adhesive layer). Next, this laminate was loaded on an unwinding unit of an extrusion lamination machine, and a sealant layer (80 μm thickness) was extruded and laminated on the second anticorrosion treatment layer under processing conditions of 270°C and 100 m/min. It should be noted that, for providing the sealant layer, compounds of various materials were prepared in advance using a twin screw extruder, followed by water cooling and/or pelletization, for use in extrusion lamination. For forming the sealant layer, the sealant layer-forming resin composition shown in Table 5 was used.
The laminate obtained in this way was heat-treated so that the maximum temperature reached of the laminate would be 220°C to produce a packaging material (laminate of substrate layer / first adhesive layer / first anticorrosion treatment layer / barrier layer / second anticorrosion treatment layer / sealant layer).

(Examples 2-28 to 2-30 and 2-33)

A packaging material (laminate of substrate layer / first adhesive layer / first anticorrosion treatment layer / barrier layer / second anticorrosion treatment layer / second adhesive layer / sealant layer) was produced as in Example 2-11 except that the components of the sealant layer-forming resin composition were changed as shown in Table 5.

(Examples 2-31, 2-32 and 2-34)

A packaging material (laminate of substrate layer / first adhesive layer / first anticorrosion treatment layer / barrier layer / second anticorrosion treatment layer / sealant layer) was produced as in Example 2-26 except that the components of the sealant layer-forming resin composition were changed as shown in Table 5.

(Examples 2-35, 2-38 and 2-39)

As in Example 2-11, a barrier layer provided with first and second anticorrosion treatment layers was laminated to the substrate layer using the polyurethane-based adhesive (first adhesive layer). Next, the second anticorrosion treatment layer side surface of the barrier layer provided with the first and second anticorrosion treatment layers was dry-laminated to the sealant layer using the epoxy-based adhesive (second adhesive layer). The lamination between the barrier layer and the sealant layer was performed by applying the epoxy-based adhesive onto the surface of the barrier layer facing away from the surface provided with the substrate layer so that the cured thickness would be 3 μm, drying the coating for 1 minute at 80°C, laminating the sealant layer thereto, and aging the laminate for 3 hours at 120°C. The sealant layer used was a multilayer cast film (each layer with 40 μm thickness) prepared in advance using the sealant layer-forming resin composition for barrier layer side use and the sealant layer-forming resin composition for innermost layer side use shown in Table 6. Through the method described above, a packaging material (laminate of substrate layer / first adhesive layer / first anticorrosion treatment layer / barrier layer / second anticorrosion treatment layer / second adhesive layer / sealant layer (including a barrier layer side sealant layer and an innermost layer side sealant layer)) was produced. It should be noted that the hydrogen sulfide adsorbent was added to both of the two layers of the sealant layer.

(Examples 2-36, 2-37 and 2-40)

As in Example 2-11, a barrier layer provided with first and second anticorrosion treatment layers was laminated to the substrate layer using the polyurethane-based adhesive (first adhesive layer). Next, this laminate was loaded on

EP 4 084 192 A1

an unwinding unit of an extrusion lamination machine, and a two-layer sealant layer (each with 40 µm thickness) was extruded and laminated on the second anticorrosion treatment layer under processing conditions of 270°C and 100 m/min. It should be noted that, for providing the sealant layer, compounds of various materials were prepared in advance using a twin screw extruder, followed by water cooling and/or pelletization, for use in extrusion lamination. For forming the sealant layer, the sealant layer-forming resin composition for the barrier layer side use and the sealant layer-forming resin composition for the innermost layer side use shown in Table 6 were used.

The laminate obtained in this way was heat-treated so that the maximum temperature reached of the laminate would be 220°C to produce a packaging material (laminate of substrate layer / first adhesive layer / first anticorrosion treatment layer / barrier layer / second anticorrosion treatment layer / sealant layer (including a barrier layer side sealant layer and an innermost layer side sealant layer)). It should be noted that the hydrogen sulfide adsorbent was added to both of the two layers of the sealant layer.

(Examples 2-41 and 2-42)

A packaging material (laminate of substrate layer / first adhesive layer / first anticorrosion treatment layer / barrier layer / second anticorrosion treatment layer / second adhesive layer / sealant layer) was produced as in Example 2-11 except that the components of the sealant layer-forming resin composition were changed as shown in Table 6.

(Comparative Examples 2-1, 2-2, 2-4 and 2-6)

A packaging material (laminate of substrate layer / first adhesive layer / first anticorrosion treatment layer / barrier layer / second anticorrosion treatment layer / second adhesive layer / sealant layer) was produced as in Example 2-11 except that the components of the sealant layer-forming resin composition were changed as shown in Table 7.

(Comparative Examples 2-3 and 2-5)

A packaging material (laminate of substrate layer / first adhesive layer / first anticorrosion treatment layer / barrier layer / second anticorrosion treatment layer / sealant layer) was produced as in Example 2-26 except that the components of the sealant layer-forming resin composition were changed as shown in Table 7.

[Measurement of crystallinity after heat sealing)

Two packaging materials each using a polyester or a polyamide as the second resin were prepared and laminated with each other so that their sealant layers faced each other, followed by heat sealing for 3 seconds under conditions of 260°C and 0.5 MPa. After that, the laminate was cooled down to 25°C and then crystallinity of the polyester or polyamide in the sealant layers was measured. The crystallinity was calculated from the area ratio of crystalline peak / (amorphous peak + crystalline peak) using an IR.

(Measurement of heat seal strength at room temperature)

A sample of each packaging material cut to 60 mm × 120 mm was folded in half and heat-sealed at one side thereof for 3 seconds at 220°C and 0.5 MPa using a seal bar having a width of 10 mm. The heat-sealed packaging material was aged for 60 minutes under a condition of 150°C and then cooled down to room temperature. The heat-sealed portion was cut at a 15 mm width (see Fig. 5), and seal strength (T-peel strength) was measured using a test machine (manufactured by INSTRON Inc.). The test was conducted under conditions of 23°C, 50% RH, and peel rate of 50 mm/min according to JIS K 6854. Based on the measured seal strength (burst strength), each sample was evaluated according to the following criteria. If the evaluation is C or higher, it means that the sample passed the test.

A: Seal strength was 40 N/15 mm or more.
B: Seal strength was 30 N/15 mm or more and less than 40 N/15 mm.
C: Seal strength was 25 N/15 mm or more and less than 30 N/15 mm.
D: Seal strength was less than 25 N/15 mm.

By comparing seal strengths before and after 150°C aging (this may also be termed 150°C AG hereinafter), rate of decrease in seal strength was calculated based on the following formula.

$$\text{Rate of decrease (\%)} = \{(\text{seal strength before } 150°C \text{ AG} - \text{seal strength after } 150°C \text{ AG}) /$$

$$\text{seal strength before } 150°C \text{ AG}\} \times 100$$

(Measurement of heat seal strength at high temperatures)

A sample of each packaging material cut to 60 mm × 120 mm was folded in half and heat-sealed at one side thereof for 3 seconds at 220°C and 0.5 MPa using a seal bar having a width of 10 mm. After that, the heat-sealed portion was cut at a width of 15 mm (see Fig. 5), left to stand for 5 minutes under a condition of 150°C, and then seal strength (T-peel strength) of the portion was measured under conditions of 150°C and peel rate of 50 mm/min using a test machine (manufactured by INSTRON Inc.). Based on the measured seal strength (burst strength), each sample was evaluated according to the following criteria. If the evaluation is C or higher, it means that the sample passed the test.

A: Seal strength was 35 N/15 mm or more.
B: Seal strength was 30 N/15 mm or more and less than 35 N/15 mm.
C: Seal strength was 20 N/15 mm or more and less than 30 N/15 mm.
D: Seal strength was less than 20 N/15 mm.

(Measurement of heat seal strength at room temperature after exposure to $H_2S$)

A sample of each packaging material cut to 60 mm × 120 mm was folded in half and heat-sealed at one side thereof for 3 seconds at 220°C and 0.5 MPa using a seal bar having a width of 10 mm. After that, the heat-sealed portion was cut at a width of 15 mm (see Fig. 5) and left to stand for 72 hours under room temperature conditions and with hydrogen sulfide concentration of 20 mass ppm. After that, the resultant heat-sealed portion was left to stand for 5 minutes under room temperature conditions, and then heat seal strength (T-peel strength) of the portion was measured using a test machine (manufactured by INSTRON Inc.). The test was conducted under conditions of 23°C, 50% RH, and peel rate of 50 mm/min according to JIS K 6854. Based on the measured seal strength (burst strength), each sample was evaluated according to the following criteria.

A: Seal strength was 50 N/15 mm or more.
B: Seal strength was 40 N/15 mm or more and less than 50 N/15 mm.
C: Seal strength was 35 N/15 mm or more and less than 50 N/15 mm.
D: Seal strength was less than 35 N/15 mm.

(Measurement of heat seal strength at high temperatures after exposure to $H_2S$)

A sample of each packaging material cut to 60 mm × 120 mm was folded in half and heat-sealed at one side thereof for 3 seconds at 220°C and 0.5 MPa using a seal bar having a width of 10 mm. After that, the heat-sealed portion was cut at a width of 15 mm (see Fig. 5) and left to stand for 72 hours under room temperature conditions and with hydrogen sulfide concentration of 20 mass ppm. After that, the resultant heat-sealed portion was left to stand for 5 minutes under 150°C conditions, and then seal strength (T-peel strength) of the portion was measured under conditions of 150°C and peel rate of 50 mm/min using a test machine (manufactured by INSTRON Inc.). Based on the measured seal strength (burst strength), each sample was evaluated according to the following criteria.

A: Burst strength was 35 N/15 mm or more.
B: Burst strength was 30 N/15 mm or more and less than 35 N/15 mm.
C: Burst strength was 20 N/15 mm or more and less than 30 N/15 mm.
D: Burst strength was less than 20 N/15 mm.

[Table 3]

| | Anticorrosion treatment layer | Layer containing HS adsorptive material | Lam. structure | Sealant layer-forming resin composition | | | | Cryst. after heat seal | Evaluation | | | | |
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°C AG | Rate of dec. in seal str. | | | |
| E 2-1 | - | - | Dry | 50% bl. PP | - | 50% PL A | - | 5% | B | 6% | C | C | C |
| E 2-2 | - | - | Dry | 50% bl. PP | - | 50% PL B | - | 85% | C | 18% | B | C | C |
| E 2-3 | - | - | Dry | 50% bl. PP | - | 50% PL C | - | 19% | B | 11% | B | C | C |
| E 2-4 | (CL-1)+(CL-2) | Sealant layer | Dry | 50% bl. PP | - | 50% PL C | - | 19% | B | 11% | B | B | B |
| E 2-5 | (CL-1)+(CL-2) | Sealant layer | Dry | 30% bl. PP | - | 70% PL C | - | 19% | B | 14% | B | B | B |
| E 2-6 | (CL-1)+(CL-2) | Sealant layer | Dry | 70% bl. PP | - | 30% PL C | - | 19% | B | 9% | B | B | B |
| E 2-7 | (CL-1)+(CL-2) | Sealant layer | Dry | 5% bl. PP | - | 95% PL C | - | 19% | C | 19% | A | C | A |
| E 2-8 | (CL-1)+(CL-2) | Sealant layer | Dry | 95% bl. PP | - | 5% PL C | - | 19% | A | 3% | C | A | C |
| E 2-9 | (CL-1)+(CL-2) | Sealant layer | Dry | 49.8% bl. PP | 0.2% MAN | 50% PL C | - | 19% | B | 9% | A | B | A |
| E 2-10 | (CL-1)+(CL-2) | Sealant layer | Dry | - | 50% MAN | 50% PL C | - | 19% | A | 3% | B | A | B |
| E 2-11 | (CL-1)+(CL-2) | Sealant layer | Dry | 40% bl. PP | 10% MAN | 50% PL C | - | 19% | A | 5% | A | A | A |

38

| | Anticorrosion treatment layer | Layer containing HS adsorptive material | Lam. structure | Sealant layer-forming resin composition | | | | Cryst. after heat seal | Evaluation | | | | | |
|---|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ | |
| | | | | PO | Mod. PO | | | | After 150°C AG | Rate of dec. in seal str. | | | | |
| E 2-12 | (CL-1)+(CL-2) | Second adhesive layer | Dry | 40% bl. PP | 10% MAN | 50% PL C | - | 19% | A | 5% | A | A | A | |

E = Example
bl. PP = block polypropylene
HS = hydrogen sulfide
PL = polyester
PO = polyolefin
MAN = maleic anhydride

EP 4 084 192 A1

39

[Table 4]

| | Anticorrosion treatment layer | Layer containing HS adsorptive material | Lam. structure | Sealant layer-forming resin composition | | | | Cryst. after heat seal | Evaluation | | | | |
|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°C AG | Rate of dec. in seal str. | | | |
| E 2-13 | (CL-1)+(CL-2) | Sealant layer | Dry | 45% bl. PP | 5% MAN | 50% PL C | - | 19% | A | 6% | A | A | A |
| E 2-14 | (CL-1)+(CL-2) | Sealant layer | Dry | 30% bl. PP | 20% MAN | 50% PL C | - | 19% | A | 4% | A | A | A |
| E 2-15 | - | Sealant layer | Dry | 40% bl. PP | 10% MAN | 50% PL C | - | 19% | A | 5% | A | B | B |
| E 2-16 | (CL-1)+(CL-2) | - | Dry | 40% bl. PP | 10% MAN | 50% PL C | - | 19% | A | 5% | A | B | B |
| E 2-17 | (CL-1)+(CL-2) | Sealant layer | Dry | 40% bl. PP | 10% MAN | 50% PL D | - | 11% | A | 4% | B | A | B |
| E 2-18 | (CL-1)+(CL-2) | Sealant layer | Dry | 40% bl. PP | 10% MAN | 50% PL E | - | 60% | B | 12% | A | B | A |
| E 2-19 | (CL-1)+(CL-2) | Sealant layer | Dry | 40% bl. PP | 10% MAN | 50% PL A | - | 5% | A | 1% | C | A | C |
| E 2-20 | (CL-1)+(CL-2) | Sealant layer | Dry | 40% bl. PP | 10% MAN | 50% PL B | - | 85% | C | 13% | A | C | A |
| E 2-21 | (CL-1)+(CL-2) | Sealant layer | Dry | 40% bl. PP | 10% HG | 50% PL C | - | 19% | A | 5% | B | A | B |

(continued)

| | Anticorrosion treatment layer | Layer containing HS adsorptive material | Lam. structure | Sealant layer-forming resin composition | | | | Cryst. after heat seal | Evaluation | | | | |
|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°C AG | Rate of dec. in seal str. | | | |
| E 2-22 | (CL-1)+(CL-2) | Sealant layer | Dry | 40% bl. PP | 10% CG | 50% PL C | - | 19% | A | 5% | B | A | B |
| E 2-23 | (CL-1)+(CL-2) | Sealant layer | Dry | 40% bl. PP | 10% EG | 50% PL C | - | 19% | A | 5% | B | A | B |
| E 2-24 | (CL-3)+(CL-2) | Sealant layer | Dry | 40% bl. PP | 10% MAN | 50% PL C | - | 19% | A | 5% | A | A | A |

E = Example
bl. PP = block polypropylene
HS = hydrogen sulfide
PL = polyester
PO = polyolefin
MAN = maleic anhydride
HG = hydroxyl group
CG = carboxyl group
EG = ester group

[Table 5]

| | Anticorrosion treatment layer | Layer containing HS adsorptive material | Lam. structure | Sealant layer-forming resin composition | | | | Cryst after heat seal | Evaluation | | | | |
|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°CAG | Rate of dec. in seal str. | | | |
| E 2-25 | (CL-1)+(CL-2) | Sealant layer | Thermal | 50% bl. PP | - | 50% PL A | - | 5% | B | 6% | C | C | C |
| E 2-26 | (CL-1)+(CL-2) | Sealant layer | Thermal | 40% bl. PP | 10% MAN | 50% PL C | - | 19% | A | 5% | A | A | A |
| E 2-27 | (CL-1)+(CL-2) | Sealant layer | Thermal | - | 50% MAN | 50% PL C | - | 19% | A | 3% | B | A | B |
| E 2-28 | (CL-1)+(CL-2) | Sealant layer | Dry | 50% bl. PP | - | 50% ny6 | - | 21% | B | 9% | B | C | C |
| E 2-29 | (CL-1)+(CL-2) | Sealant layer | Dry | 40% bl. PP | 10% MAN | 50% ny6 | - | 21% | A | 4% | A | A | A |
| E 2-30 | (CL-1)+(CL-2) | Sealant layer | Dry | 40% bl. PP | 10% HG | 50% ny6 | - | 21% | A | 4% | B | A | B |
| E 2-31 | (CL-1)+(CL-2) | Sealant layer | Thermal | 40% bl. PP | 10% MAN | 50% ny6 | - | 21% | A | 4% | A | A | A |
| E 2-32 | (CL-1)+(CL-2) | Sealant layer | Thermal | - | 50% MAN | 50% ny6 | - | 21% | A | 2% | B | A | B |
| E 2-33 | (CL-1)+(CL-2) | Sealant layer | Dry | 40% bl. PP | 10% MAN | 25% PL C | 25% ny6 | PL C: 19% Ny6: 21% | A | 5% | A | A | A |

(continued)

| | Anticorrosion treatment layer | Layer containing HS adsorptive material | Lam. structure | Sealant layer-forming resin composition | | | | Cryst after heat seal | Evaluation | | | | |
|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°CAG | Rate of dec. in seal str. | | | |
| E 2-34 | (CL-1)+(CL-2) | Sealant layer | Thermal | 40% bl. PP | 10% MAN | 25% PL C | 25% ny6 | $\overline{PL}$ C: 19% Ny6: 21% | A | 5% | A | A | A |

E = Example PO = polyolefin
bl. PP = block polypropylene MAN = maleic anhydride
HS = hydrogen sulfide HG = hydroxyl group
PL = polyester

[Table 6]

| | Anticorrosion treatment layer | Layer containing HS adsorptive material | Lam. structure | Sealant layer-forming resin composition | | | | Cryst after heat seal | Evaluation | | | | |
|---|---|---|---|---|---|---|---|---|---|---|---|---|---|
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°CAG | Rate of dec. in seal str. | | | |
| E 2-35 | (CL-1)+(CL-2) | Sealant layer | Dry | Barrier layer side: Same comp. as E 2-10 (40 μm) Innermost layer side: Same comp. as E 2-11 (40 μm) | | | | PL C: 19% | A | 5% | A | A | A |
| E 2-36 | (CL-1)+(CL-2) | Sealant layer | Thermal | Barrier layer side: Same comp. as E 2-10 (40 μm) Innermost layer side: Same comp. as E 2-11 (40 μm) | | | | PL C: 19% | A | 5% | A | A | A |
| E 2-37 | (CL-1)+(CL-2) | Sealant layer | Thermal | Barrier layer side: Same comp. as E 2-32 (40 μm) Innermost layer side: Same comp. as E 2-31 (40 μm) | | | | Ny6: 21% | A | 4% | A | A | A |
| E 2-38 | (CL-1)+(CL-2) | Sealant layer | Dry | Barrier layer side: Same comp. as E 2-11 (40 μm) Innermost layer side: 100% bl. PP (40 μm) | | | | PL C: 19% | A | 2% | B | A | B |
| E 2-39 | (CL-1)+(CL-2) | Sealant layer | Dry | Barrier layer side: Same comp. as E 2-11 (40 μm) Innermost layer side: 100% PL C (40 μm) | | | | PL C: 19% | B | 11% | A | B | A |
| E 2-40 | (CL-1)+(CL-2) | Sealant layer | Thermal | Barrier layer side: 100% MAN Mod. PP (40 μm) Innermost layer side: Same comp. as E 2-10 (40 μm) | | | | PL C: 19% | A | 2% | B | A | B |
| E 2-41 | (CL-1)+(CL-2) | Sealant layer | Dry | 40% bl. PP | 10% MAN | 50% PC | - | - | A | 2% | A | A | A |
| E 2-42 | (CL-1)+(CL-2) | Sealant layer | Dry | 40% bl. PP | 10% MAN | 50% PPE | - | - | A | 2% | A | A | A |

E = Example  MAN = maleic anhydride
bl. PP = block polypropylene  PC = polycarbonate
HS = hydrogen sulfide  PPE = polyphenylene ether
PL = polyester
PO = polyolefin

[Table 7]

| | Anticorrosion treatment layer | Layer containing HS adsorptive material | Lam. structure | Sealant layer-forming resin composition | | | | Cryst after heat seal | Evaluation | | | | |
| | | | | First resin | | Second resin | | | Room temp. seal str. | | High temp. seal str. | Room temp. seal str. after exp. to $H_2S$ | High temp. seal str. after exp. to $H_2S$ |
| | | | | PO | Mod. PO | | | | After 150°CAG | Rate of dec. in seal str. | | | |
| CE 2-1 | (CL-1)+(CL-2) | Sealant layer | Dry | 100% bl. PP | - | - | - | - | A | 1% | D | A | D |
| CE 2-2 | (CL-1)+(CL-2) | Sealant layer | Dry | - | 100% MAN | - | - | - | A | 1% | D | A | D |
| CE 2-3 | (CL-1)+(CL-2) | Sealant layer | Thermal | - | 100% MAN | - | - | - | A | 1% | D | A | D |
| CE 2-4 | (CL-1)+(CL-2) | Sealant layer | Dry | - | - | 100% PL C | - | 19% | D | 25% | A | D | A |
| CE 2-5 | (CL-1)+(CL-2) | Sealant layer | Thermal | - | - | 100% PL C | - | 19% | D | 25% | A | D | A |
| CE 2-6 | (CL-1)+(CL-2) | Sealant layer | Dry | - | - | 100% ny6 | - | 21% | D | 21% | A | D | A |

CE = Comparative Example
bl. PP = block polypropylene
HS = hydrogen sulfide
PL = polyester
PO = polyolefin
MAN = maleic anhydride
HG = hydroxyl group

[Materials used]

Materials used in Examples 3-1 to 3-13 and Comparative Examples 3-1 to 3-4 are shown below.

<Substrate layer (25 μm thickness)>

A polyethylene terephthalate film (25 μm thickness) was prepared as a substrate layer, followed by corona-treating one surface thereof.

<First adhesive layer (4 μm thickness)>

A polyurethane adhesive (manufactured by Toyo Ink Co., Ltd.) was used, containing a polyester polyol-based base resin to which a tolylene diisocyanate adduct curing agent was added.

<First anticorrosion treatment layer (substrate layer side) and second anticorrosion treatment layer (sealant layer side)>

(CL-1): A chemical conversion treatment agent was used, which was prepared by adding chromium fluoride ($CrF_3$) to a water-soluble phenol resin (manufactured by Sumitomo Bakelite Co., Ltd.) having a solid content concentration adjusted to 1 mass%, and adjusting the concentration of the $CrF_3$ using a phosphoric acid aqueous solution having a 1 mass% concentration as a solvent, so that the Cr content in the final dry coating film would be 10 mg/m$^2$.

(CL-2): A sodium polyphosphate-stabilized cerium oxide sol was used, with the solid content concentration adjusted to 10 mass% using distilled water as a solvent. It should be noted that the sodium polyphosphate-stabilized cerium oxide sol was obtained by mixing 10 parts by mass of Na salt of phosphoric acid into 100 parts by mass of cerium oxide.

(CL-3): A composition was used, which contained 90 mass% of polyallylamine (manufactured by Nitto Boseki Co., Ltd) with the solid content concentration adjusted to 5 mass% using distilled water as a solvent, and 10 mass% of polyglycerol polyglycidyl ether (manufactured by Nagase Chemtex Corp.).

<Barrier layer (40 μm thickness)>

An annealed and degreased soft aluminum foil (8079 Material manufactured by Toyo Aluminum K.K.) was used.

<Second adhesive layer>

An epoxy-based adhesive (EP4100/EH4602=100/25 (mass ratio)) manufactured by ADEKA Corporation) diluted to solid content of 30% with ethyl acetate was used. This adhesive was applied to a surface of the barrier layer (soft aluminum foil) at a dry coating weight of 3 g/m$^2$. The coated barrier layer was dried for 1 minute at 80°C and then laminated with the sealant film. After that, the laminate was aged for 3 hours at 120°C.

<Sealant layer>

For forming a sealant layer, the following materials were prepared. [Base resin]

Polyester resin 1: Copolymer of terephthalic acid as an acid component and ethylene glycol as a glycol component
Polyester resin 2: Copolymer of terephthalic acid as an acid component and ethylene glycol and butanediol as glycol components
Polyester resin 3: Copolymer of terephthalic acid and isophthalic acid as acid components and ethylene glycol, butanediol and neopentyl glycol as glycol components
Polyester resin 4: Copolymer of terephthalic acid as an acid component and ethylene glycol and 1,4-cyclohexanedimethanol as glycol components
Polyester resin 5: Copolymer of terephthalic acid and isophthalic acid as acid components and butanediol and hexanediol as glycol components
Polyester resin 6: Copolymer of terephthalic acid and isophthalic acid as acid components and butanediol and hexanediol as glycol components (butanediol ratio is higher than in polyester resin 5)
Polyester resin 7: Copolymer of naphthalene dicarboxylic acid as an acid component and 1,4-cyclohexanedimethanol as a glycol component

Polyester resin 8: Copolymer of terephthalic acid and isophthalic acid as acid components and ethylene glycol and hexanediol as glycol components
Polyolefin resin 1: Amide-modified polyethylene
Polyolefin resin 2: Random polypropylene

[Plasticizer]

Glycol diester: 10 parts by mass were added as necessary to 100 parts by mass of a base resin material.

[Hydrogen sulfide adsorbent]

Zinc oxide: 3 parts by mass were added as necessary to 100 parts by mass of a base resin material.

<Production of packaging material>

(Example 3-1)

First, first and second anticorrosion treatment layers were provided to the barrier layer through the following procedure. (CL-1) was applied to both surfaces of the barrier layer by micro gravure coating at a dry coating weight of 30 mg/m$^2$, followed by baking at 200°C in a drying unit (this treatment is termed chemical conversion treatment).
Next, the first anticorrosion treatment layer side surface of the barrier layer was dry-laminated to the substrate layer using the polyurethane-based adhesive (first adhesive layer). Furthermore, the second anticorrosion treatment layer side surface of the barrier layer was dry-laminated to the sealant layer (80 μm thickness) using the polyurethane-based adhesive (second adhesive layer). Through these steps, a packaging material of Example 3-1 was obtained. Components of the sealant layer were as shown below.

Polyester resin: 100 parts by mass
Plasticizer: 10 parts by mass
Hydrogen sulfide adsorbent: 3 parts by mass

(Example 3-2)

A packaging material was produced as in Example 3-1 except that first and second anticorrosion treatment layers were formed using (CL-2) and (CL-3) instead of (CL-1). Specifically, (CL-2) was applied to both surfaces of the barrier layer by micro gravure coating at a dry coating weight of 70 mg/m$^2$, followed by baking at 200°C in a drying unit. Next, (CL-3) was applied to the obtained layer by micro gravure coating at a dry coating weight of 20 mg/m$^2$, thereby forming composite layers of (CL-1) and (CL-2) as first and second anticorrosion treatment layers (this treatment is termed composite treatment). The composite layers were ensured to exhibit corrosion prevention performance by compounding two materials (CL-2) and (CL-3).

(Example 3-3)

A packaging material was produced as in Example 3-2 except that the sealant layer was formed using a sealant material (content of plasticizer: 10 parts by mass, content of hydrogen sulfide adsorbent: 3 parts by mass) containing the polyester resin 2 instead of the polyester resin 1.

(Example 3-4)

A packaging material was produced as in Example 3-2 except that no hydrogen sulfide adsorbent was added to the sealant material.

(Example 3-5)

A packaging material was produced as in Example 3-1 except that no anticorrosion treatment was applied to the barrier layer and no hydrogen sulfide adsorbent was added to the sealant material.

(Example 3-6)

A packaging material was produced as in Example 3-1 except that no anticorrosion treatment was applied to the barrier layer, and the polyester resin 3 (content of plasticizer: 0 parts by mass, content of hydrogen sulfide adsorbent: 0 parts by mass) was used as a sealant material.

(Example 3-7)

A packaging material was produced as in Example 3-2 except that the polyester resin 3 was used instead of the polyester resin 1 and no plasticizer was added.

(Example 3-8)

A packaging material was produced as in Example 3-7 except that the polyester resin 4 was used instead of the polyester resin 3.

(Example 3-9)

A packaging material was produced as in Example 3-7 except that the polyester resin 5 was used instead of the polyester resin 3.

(Example 3-10)

A packaging material was produced as in Example 3-7 except that the polyester resin 6 was used instead of the polyester resin 3.

(Example 3-11)

A packaging material was produced as in Example 3-7 except that the polyolefin resin 1 was used instead of the polyester resin 3.

(Example 3-12)

A packaging material was produced as in Example 3-2 except that the barrier layer and the sealant layer were bonded together using thermal lamination instead of dry lamination. The thermal lamination was performed as follows. Specifically, a laminate of substrate layer / first adhesive layer / first anticorrosion treatment layer / barrier layer / second anticorrosion treatment layer was loaded on an unwinding unit of an extrusion lamination machine, and materials of the sealant layer were extruded onto the second anticorrosion treatment layer under processing conditions of 270°C and 100 m/min. The laminate obtained in this way was conveyed being wound about a roll heated to 220°C to apply heat treatment to the laminate for about 0.5 seconds at 220°C to thereby obtain a packaging material (substrate layer / first adhesive layer / first anticorrosion treatment layer / barrier layer / second anticorrosion treatment layer / sealant layer).

(Example 3-13)

A packaging material was produced as in Example 3-7 except that the sealant material containing both the polyester resins 1 and 7 instead of the polyester resin 3 was used. Components of the sealant material were as shown below.

Polyester resin 1:50 parts by mass
Polyester resin 7: 50 parts by mass
Hydrogen sulfide adsorbent: 3 parts by mass

(Comparative Example 3-1)

A packaging material was produced as in Example 3-7 except that the sealant material containing the polyester resin 7 instead of the polyester resin 3 was used. Components of the sealant material were as shown below.

Polyester resin 7: 100 parts by mass

Hydrogen sulfide adsorbent: 3 parts by mass

(Comparative Example 3-2)

A packaging material was produced as in Example 3-2 except that no plasticizer was added to the sealant material.

(Comparative Example 3-3)

A packaging material was produced as in Example 3-7 except that the polyester resin 8 was used instead of the polyester resin 3.

(Comparative Example 3-4)

A packaging material was produced as in Example 3-12 except that the polyolefin resin 2 was used instead of the polyester resin 1 and no hydrogen sulfide adsorbent was added.

<Evaluation>

Evaluation tests shown below were conducted on the packaging materials obtained in Examples 3-1 to 3-13 and Comparative Examples 3-1 to 3-4.

[Loss tangent tan $\delta$ of sealant layer]

Each packaging material obtained was immersed in a sodium hydroxide aqueous solution to dissolve the barrier layer to obtain a film formed of only the sealant layer. Subsequently, a sample was prepared by cutting the obtained film at a width of 10 mm (TD) and a length of 30 mm (MD), and held by chucks with a distance therebetween set to 20 mm. Using a method according to JIS K 7244-4, measurements were performed using a dynamic viscoelastic measurement device (product name: DMS6100 manufactured by Seiko Instruments Inc.) under conditions shown below, and a loss tangent tan $\delta$ was calculated from a loss elastic modulus E" and a storage elastic modulus E'. Furthermore, temperature at a secondary dispersion peak $\gamma$ and temperature at a primary dispersion peak $\alpha$ were calculated from a tan $\delta$ profile obtained. The results are shown in Tables 8 and 9.

Peeling mode: tensile
Temperature rise rate: 2°C/min
Temperature range: -100°C to 120°C
Frequency: 1.0 Hz

<Initial seal strength>

Each packaging material was cut to obtain a film of 60 mm × 120 mm size. This was folded in half and heat-sealed at one side for 3 seconds at 220°C and 0.5 MPa using a seal bar having a width of 10 mm. After that, the heat-sealed portion was cut at a width of 15 mm to obtain a measurement sample (see Fig. 5). Seal strength (T-peel strength) was measured using a test machine (manufactured by INSTRON Inc.). The test was conducted under conditions of 23°C, 50% RH, and peel rate of 50 mm/min according to JIS K 6854. Based on the results, the samples were evaluated based on the following criteria. The results are shown in Tables 8 and 9.

A: Burst strength was 50 N/15 mm or more.
B: Burst strength was 40 N/15 mm or more and less than 50 N/15 mm.
C: Burst strength was 35 N/15 mm or more and less than 40 N/15 mm.
D: Burst strength was less than 35 N/15 mm.

[Seal strength at high temperatures]

Each packaging material was cut to obtain a film of 60 mm × 120 mm size. This was folded in half and heat-sealed at one side for 3 seconds at 220°C and 0.5 MPa using a seal bar having a width of 10 mm. The heat-sealed portion was cut at a width of 15 mm and left to stand for 5 minutes under 150° conditions, and then heat seal strength (T-peel strength at a peel rate of 50 mm/min) was measured under 150°C conditions. Based on the results, the samples were evaluated based on the following criteria. The results are shown in Tables 8 and 9.

> A: Burst strength was 35 N/15 mm or more.
> B: Burst strength was 30 N/15 mm or more and less than 35 N/15 mm.
> C: Burst strength was 20 N/15 mm or more and less than 30 N/15 mm.
> D: Burst strength was less than 20 N/15 mm.

[Seal strength (under room temperature conditions) after exposure to hydrogen sulfide]

Each packaging material was cut to obtain a film of 60 mm × 120 mm size. This was folded in half and heat-sealed at one side for 3 seconds at 220°C and 0.5 MPa using a seal bar having a width of 10 mm. The heat-sealed portion was cut at a width of 15 mm and left to stand for 72 hours under room temperature conditions and with hydrogen sulfide concentration of 20 ppm, and then heat seal strength (T-peel strength at a peel rate of 50 mm/min) was measured under room temperature conditions. Based on the results, the samples were evaluated based on the following criteria. The results are shown in Tables 8 and 9.

> A: Burst strength was 50 N/15 mm or more.
> B: Burst strength was 40 N/15 mm or more and less than 50 N/15 mm.
> C: Burst strength was 35 N/15 mm or more and less than 40 N/15 mm.
> D: Burst strength was less than 35 N/15 mm.

[Seal strength (under 150° conditions) after exposure to hydrogen sulfide]

Each packaging material was cut to obtain a film of 60 mm × 120 mm size. This was folded in half and heat-sealed at one side for 3 seconds at 220°C and 0.5 MPa using a seal bar having a width of 10 mm. The heat-sealed portion was cut at a width of 15 mm and left to stand for 72 hours under room temperature conditions and with a hydrogen sulfide concentration of 20 ppm. After that, the heat-sealed portion was left to stand for 5 minutes under 150° conditions, and then heat seal strength (T-peel strength at a peel rate of 50 mm/min) was measured under 150°C conditions. Based on the results, the samples were evaluated based on the following criteria. The results are shown in Tables 8 and 9.

> A: Burst strength was 35 N/15 mm or more.
> B: Burst strength was 30 N/15 mm or more and less than 35 N/15 mm.
> C: Burst strength was 20 N/15 mm or more and less than 30 N/15 mm.
> D: Burst strength was less than 20 N/15 mm.

[Table 8]

| | | E 3-1 | E 3-2 | E 3-3 | E 3-4 | E 3-5 | E 3-6 | E 3-7 | E 3-8 |
|---|---|---|---|---|---|---|---|---|---|
| Base resin of sealant layer | | PL 1 | PL 1 | PL 2 | PL 1 | PL 1 | PL 3 | PL 3 | PL 4 |
| Plasticizer | | Added | Added | Added | Added | Added | Not added | Not added | Not added |
| HS adsorptive material | | Added | Added | Added | Not added | Not added | Not added | Added | Added |
| Anticorrosion treatment | | Chemical conversion treatment | Composite treatment | Composite treatment | Composite treatment | None | None | Composite treatment | Composite treatment |
| Lamination method | | Dry | Dry | Dry | Dry | Dry | Dry | Dry | Dry |
| Peak temp. (°C) | Secondary dispersion peak $\gamma$ | -90 | -90 | -108 | -90 | -90 | -107 | -107 | -74 |
| | Primary dispersion peak $\alpha$ | 78 | 78 | 55 | 78 | 78 | 25 | 25 | 89 |
| Evaluation for seal strength | Initial (room temp.) | A | A | A | A | A | B | B | A |
| | Under 150°C cond. | A | A | A | A | B | C | C | A |
| | After exp. to HS (under room temp. cond.) | A | A | A | B | C | C | B | A |
| | After exp. to HS (under150°C cond.) | A | A | A | B | C | C | C | A |
| E = Example<br>PL = polyester<br>HS = hydrogen sulfide | | | | | | | | | |

[Table 9]

| | | E3-9 | E3-10 | E3-11 | E3-12 | E3-13 | CE3-1 | CE3-2 | CE3-3 | CE3-4 |
|---|---|---|---|---|---|---|---|---|---|---|
| Base resin of sealant layer | | PL 5 | PL 6 | PO 1 | PL 1 | PL 1,7 | PL 7 | PL 1 | PL 8 | PO 2 |
| Plasticizer | | Not added | Not added | Not added | Added | Not added | Not added | Not added | Not added | Not added |
| HS adsorptive material | | Added | Added | Added | Added | Added | Added | Added | Added | Not added |
| Anticorrosion treatment | | Composite treatment | Composite treatment | Composite treatment | Composite treatment | Composite treatment | Composite treatment | Composite treatment | Composite treatment | Composite treatment |
| Lamination method | | Dry | Dry | Dry | Thermal | Dry | Dry | Dry | Dry | Thermal |
| Peak temp. (°C) | Secondary dispersion peak $\gamma$ | -115 | -126 | -128 | -90 | -90 -40 | -40 | -45 | -132 | -140 |
| | Primary dispersion peak $\alpha$ | 46 | 46 | 35 | 78 | 78 140 | 140 | 110 | 70 | -5 |
| Evaluation for seal strength | Initial (room temp.) | A | A | A | A | B | D | D | A | A |
| | Under 150°C cond. | B | C | C | A | A | A | A | D | D |
| | After exp. to HS (under room temp. cond.) | A | A | A | A | B | D | D | A | B |
| | After exp. to HS (under 150°C cond.) | B | C | C | A | A | A | A | D | D |
| E = Example CE = Comparative Example PL = polyester PO = polyolefin HS = hydrogen sulfide | | | | | | | | | | |

In Tables 8 and 9, examples having no D evaluation can be regarded as having good overall quality. Examples 3-1 to 3-13 were evaluated as A to C for seal strength. In contrast, some of Comparative Examples 3-1 to 3-4 were evaluated as D for seal strength. Specifically, Comparative Example 3-1 was evaluated as D for seal strength at room temperature (initial and after exposure to hydrogen sulfide). This is considered to be because the temperature at the secondary dispersion peak $\gamma$ was higher than the temperature in the range of -130°C to -50°C and the temperature at the primary dispersion peak $\alpha$ was also higher than the temperature in the range of 30°C to 130°C. Comparative Example 3-2 was also evaluated as D for seal strength at room temperature (initial and after exposure to hydrogen sulfide). This is considered to be because the temperature at the secondary dispersion peak $\gamma$ was higher than the temperature in the range of -130°C to -50°C. Comparative Example 3-3 was evaluated as D for seal strength under 150°C conditions before and after exposer to hydrogen sulfide. This is considered to be because the temperature at the secondary dispersion peak $\gamma$ was lower than the temperature in the range of -130°C to -50°C. Comparative Example 3-4 was evaluated as D for seal strength under 150°C conditions before and after exposer to hydrogen sulfide. This is considered to be because the temperature at the secondary dispersion peak $\gamma$ was lower than the temperature in the range of -130°C to -50°C and the temperature at the primary dispersion peak $\alpha$ was also lower than the temperature in the range of 30°C to 130°C.

[Industrial Applicability]

According to the present disclosure, there can be provided a packaging material for a power storage device which can secure high heat seal strength and has high heat resistance even under high temperature conditions, and a power storage device using the packaging material.
Furthermore, according to the present disclosure, there can be provided a packaging material for a power storage device which can secure high heat seal strength under high temperature conditions (e.g., 150°C) and can minimize lowering of heat seal strength under room temperature conditions after use under high temperature conditions (e.g., 150°C), and a power storage device using the packaging material.
Furthermore, according to the present disclosure, there can be provided a packaging material for a power storage device that can achieve sufficiently high seal strength under high temperature conditions balanced with sufficiently high initial seal strength, and a method of producing the packaging material. In addition, according to the present disclosure, there can be provided a method of selecting a sealant film which is used as a sealant layer in a packaging material for a power storage device.

[Reference Signs List]

| 10, 20, 25, 35 | Packaging material for power storage device |
| 11 | Substrate layer |
| 12, 12a | First adhesive layer |
| 12b | Second adhesive layer |
| 13 | Barrier layer |
| 14 | Anticorrosion treatment layer |
| 14a | First anticorrosion treatment layer |
| 14b | Second anticorrosion treatment layer |
| 15 | Adhesive resin layer |
| 16 | Sealant layer |
| 16a | First resin layer |
| 16b | Second resin layer |
| 16c | Third resin layer |
| 17 | Second adhesive layer |
| 30 | Metal terminal |
| 40 | Terminal coating resin film |
| 50 | Power storage device |
| 52 | Battery element (power storage device body) |
| 53 | Metal terminal |
| 100 | Power storage device |

**Claims**

1. A packaging material for a power storage device, comprising at least a substrate layer, a barrier layer, and a sealant layer in this order, wherein
the sealant layer contains a component (A) that is a compound containing polyolefin units and having a melting point of 175°C or more or a glass transition temperature of 75°C or more, and a component (B) that is at least one resin selected from a group consisting of a polyethylene resin and a polypropylene resin.

2. The packaging material for a power storage device according to claim 1, wherein

   the component (A) contains a polyamide-polyolefin graft copolymer; and
   a content of the component (A) in the sealant layer is 5 parts by mass to 100 parts by mass relative to 100 parts by mass of the component (B).

3. The packaging material for a power storage device according to claim 1 or 2, wherein

   the component (A) contains a polyamide/polyethylene graft copolymer;
   the component (B) contains the polypropylene resin; and
   the sealant layer further contains a component (C) that is a compatibilizer having a site compatible with the polyamide/polyethylene graft copolymer and a site compatible with the polypropylene resin.

4. The packaging material for a power storage device according to any one of claims 1 to 3, wherein

   the component (A) contains a cycloolefin copolymer; and
   a content of the component (A) in the sealant layer is 5 parts by mass to 100 parts by mass relative to 100 parts by mass of the component (B).

5. The packaging material for a power storage device according to any one of claims 1 to 4, wherein

   the component (A) contains an ethylene/cycloolefin copolymer;
   the component (B) contains the polypropylene resin; and
   the sealant layer further contains a component (C) that is a compatibilizer having a site compatible with the ethylene/cycloolefin copolymer and a site compatible with the polypropylene resin.

6. A packaging material for a power storage device, comprising at least a substrate layer, a barrier layer, and a sealant layer in this order, wherein
the sealant layer contains a polyolefin as a first resin, and at least one resin, as a second resin, selected from a group consisting of a polyester, a polyamide, a polycarbonate, and a polyphenylene ether.

7. The packaging material for a power storage device according to claim 6, wherein the first resin contains a modified polyolefin having a polar group that can react with the second resin.

8. The packaging material for a power storage device according to claim 7, wherein the modified polyolefin is a polyolefin modified with maleic anhydride.

9. The packaging material for a power storage device according to any one of claims 6 to 8, wherein

   the sealant layer contains the polyester and/or the polyamide; and
   the polyester and/or the polyamide has a crystallinity of 10% or more and less than 70% after heat-sealing the sealant layer for 3 seconds at 260°C and 0.5 MPa and cooling the sealant layer to 25°C.

10. The packaging material for a power storage device according to any one of claims 1 to 9, wherein one surface or each of both surfaces of the barrier layer is provided with an anticorrosion treatment layer.

11. The packaging material for a power storage device according to any one of claims 1 to 10, wherein, when the substrate layer side of the packaging material for a power storage device is outermost and the sealant layer side thereof is innermost, at least one of layers located further inside than the barrier layer contains a hydrogen sulfide adsorbent.

12. The packaging material for a power storage device according to any one of claims 1 to 11, wherein the sealant layer has a thickness of 10 $\mu$m to 100 $\mu$m.

13. The packaging material for a power storage device according to any one of claims 1 to 12, wherein the packaging material is used for a fully solid-state battery.

14. A power storage device, comprising

    a power storage device body;
    current output terminals extending from the power storage device body; and
    the packaging material for a power storage device according to any one of claims 1 to 13, the packaging material sandwiching the current output terminals and accommodating the power storage device body.

15. The power storage device according to claim 14, wherein the power storage device is a fully solid-state battery.

16. A packaging material for a power storage device, having a laminated structure that includes at least

    a substrate layer;
    a barrier layer; and
    a sealant layer, in this order, wherein
    the sealant layer has at least one secondary dispersion peak $\gamma$ in a range of -130°C to -50°C in a loss tangent tan $\delta$ profile which is obtained through dynamic viscoelastic measurement under a condition of 1.0 Hz.

17. The packaging material for a power storage device according to claim 16, wherein the sealant layer has at least one primary dispersion peak $\alpha$ in a range of 30°C to 130°C in the tan $\delta$ profile.

18. The packaging material for a power storage device according to claim 16 or 17, wherein the sealant layer contains a plasticizer.

19. The packaging material for a power storage device according to any one of claims 16 to 18, wherein the sealant layer contains a hydrogen sulfide adsorbent.

20. The packaging material for a power storage device according to any one of claims 16 to 19, further comprising an adhesive layer provided between the barrier layer and the sealant layer, wherein
    the adhesive layer contains a hydrogen sulfide adsorbent.

21. The packaging material for a power storage device according to any one of claims 16 to 20, further comprising an anticorrosion treatment layer provided on at least one surface of the barrier layer.

22. A method of selecting a sealant film used for a sealant layer in a packaging material for a power storage device, comprising

    (A) a step of performing dynamic viscoelastic measurement under a condition of 1.0 Hz for a sealant film to be evaluated; and
    (B) a step of determining whether there is at least one secondary dispersion peak $\gamma$ in a range of -130°C to -50°C in a tan $\delta$ profile obtained through the dynamic viscoelastic measurement.

23. A method of producing a packaging material for a power storage device, comprising

    a step of preparing a sealant film which is determined as having at least one secondary dispersion peak $\gamma$ in a range of -130°C to -50°C in the tan $\delta$ profile, in the selection method according to claim 22; and
    a step of bonding the sealant film and a barrier layer together.

Fig. 1

Fig. 2

Fig. 3

25

11
12a
14a
13
14b
16

Fig. 4

Fig. 5

Fig. 6

Fig. 7

Fig. 8(a)

16

Fig. 8(b)

16

16a
16b

Fig. 8(c)

16

16c
16a
16b

Fig. 9

## INTERNATIONAL SEARCH REPORT

| International application No. |
|---|
| PCT/JP2020/046602 |

**A. CLASSIFICATION OF SUBJECT MATTER**
Int.Cl. H01M50/10(2021.01)i, B32B7/022(2019.01)i, B32B27/18(2006.01)i, B32B27/32(2006.01)i, H01G11/78(2013.01)i, H01M10/052(2010.01)i, H01M10/0562(2010.01)i, H01M50/172(2021.01)i, H01M50/183(2021.01)i
FI: H01M2/02K, H01G11/78, B32B7/022, H01M2/08K, H01M2/06K, H01M10/0562, B32B27/32Z, B32B27/18Z, H01M10/052
According to International Patent Classification (IPC) or to both national classification and IPC

**B. FIELDS SEARCHED**

Minimum documentation searched (classification system followed by classification symbols)
Int.Cl. H01M2/02, B32B7/022, B32B27/18, B32B27/32, H01G11/78, H01M2/06, H01M2/08, H01M10/052, H01M10/0562

Documentation searched other than minimum documentation to the extent that such documents are included in the fields searched
Published examined utility model applications of Japan        1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2013-206878 A (DAI NIPPON PRINTING CO., LTD.) 07 October 2013 (2013-10-07), claims 1-2, paragraphs [0079], [0082], [0083], [0084], [0085] | 1, 4<br>2-3, 5-23 |
| A | JP 2005-19077 A (TOPPAN PRINTING CO., LTD.) 20 January 2005 (2005-01-20) | 1-23 |
| A | JP 2012-238515 A (TOPPAN PRINTING CO., LTD.) 06 December 2012 (2012-12-06) | 1-23 |
| A | JP 2003-288883 A (NEC CORPORATION) 10 October 2003 (2003-10-10) | 1-23 |
| A | JP 6-20663 A (SHIN KOBE ELECTRIC MACHINERY CO., LTD.) 28 January 1994 (1994-01-28) | 1-23 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 December 2020 | Date of mailing of the international search report<br>12 January 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2020/046602 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2019/225065 A1 (TOPPAN PRINTING CO., LTD.) 28 November 2019 (2019-11-28) | 1-23 |

Form PCT/ISA/210 (second sheet) (January 2015)

# EP 4 084 192 A1

International application No.

PCT/JP2020/046602

| | | |
|---|---|---|
| JP 2013-206878 A | 07 October 2013 | (Family: none) |
| JP 2005-19077 A | 20 January 2005 | (Family: none) |
| JP 2012-238515 A | 06 December 2012 | (Family: none) |
| JP 2003-288883 A | 10 October 2003 | US 2003/0049527 A1<br>US 2006/0257732 A1<br>EP 1291934 A2<br>EP 1845569 A1<br>CN 1426121 A<br>CN 101217189 A |
| JP 6-20663 A | 28 January 1994 | (Family: none) |
| WO 2019/225065 A1 | 28 November 2019 | JP 2019-204626 A<br>CN 110998895 A |

Form PCT/ISA/210 (patent family annex) (January 2015)

**REFERENCES CITED IN THE DESCRIPTION**

**Patent documents cited in the description**

- JP 2013101765 A